# EUROPÄISCHE PATENTSCHRIFT

(11) **EP 2 625 220 B1**
(45) Veröffentlichungstag und Bekanntmachung des Hinweises auf die Patenterteilung: **09.11.2016**
(21) Anmeldenummer: 11771018.6
(22) Anmeldetag: 30.09.2011
(51) Int. Cl.: C08K 5/00, C08K 5/5313, C08K 3/32

(54) **FLAMMSCHUTZMITTEL- STABILISATOR-KOMBINATION FÜR THERMOPLASTISCHE POLYMERE**
FLAME RETARDANT-STABILIZER COMBINATION FOR THERMOPLASTIC POLYMERS
COMBINAISONS DE STABILISATEURS INGNIFUGEANTS POUR LES POLYMÈRES THERMOPLASTIQUES

(30) Priorität: 09.10.2010 DE 102010048025
(43) Veröffentlichungstag der Anmeldung: 14.08.2013
(73) Patentinhaber: Clariant International Ltd, 4132 Muttenz (CH)
(72) Erfinder: KRAUSE, Werner, 50354 Hürth (DE); BAUER, Harald, 50170 Kerpen (DE); SICKEN, Martin, 51149 Köln (DE); HÖROLD, Sebastian, 86420 Diedorf (DE); WANZKE, Wolfgang, 86161 Augsburg (DE); SCHLOSSER, Elke, 86163 Augsburg (DE)
(74) Vertreter: Mikulecky, Klaus
(86) Internationale Anmeldenummer: PCT/EP2011/004887
(87) Internationale Veröffentlichungsnummer: WO 2012/045414

(56) Entgegenhaltungen:
- EP-A1- 1 705 220
- EP-A2- 1 607 400
- WO-A1-03/078523

## Beschreibung

Die Erfindung betrifft eine Flammschutzmittel-Stabilisator-Kombination für thermoplastische Polymere sowie polymere Formmassen und Formkörper, die solche Flammschutzmittel-Stabilisator-Kombinationen enthalten.

Die Verarbeitung von thermoplastischen Kunststoffen erfolgt überwiegend in der Schmelze. Die damit verbundenen Struktur- und Zustandsänderungen übersteht kaum ein Kunststoff, ohne sich in seiner chemischen Struktur zu verändern. Vernetzungen, Oxidation, Molekulargewichtsänderungen und damit auch Änderungen der physikalischen und technischen Eigenschaften können die Folge sein. Um die Belastung der Polymere während der Verarbeitung zu reduzieren, setzt man je nach Kunststoff unterschiedliche Additive ein.

Oft werden unterschiedlicher Additive gleichzeitig verwendet, von denen jedes eine bestimmte Aufgabe übernimmt. So werden Antioxidantien und Stabilisatoren eingesetzt, damit der Kunststoff ohne chemische Schädigung die Verarbeitung übersteht und anschließend lange Zeit gegen äußere Einflüsse wie Hitze, UV-Licht, Witterung und Sauerstoff (Luft) stabil ist. Neben der Verbesserung des Fließverhaltens verhindern Gleitmittel ein zu starkes Kleben der Kunststoffschmelze an heißen Maschinenteilen und wirken als Dispergiermittel für Pigmente, Füll- und Verstärkungsstoffe.

Durch die Verwendung von Flammschutzmitteln kann die Stabilität von Kunststoffen bei der Verarbeitung in der Schmelze beeinflusst werden. Flammschutzmittel müssen häufig in hohen Dosierungen zugesetzt werden, um eine ausreichende Flammwidrigkeit des Kunststoffs nach internationalen Normen sicherzustellen. Aufgrund ihrer chemischen Reaktivität, die für die Flammschutzwirkung bei hohen Temperaturen erforderlich ist, können Flammschutzmittel die Verarbeitungsstabilität von Kunststoffen beeinträchtigen.

Es kann beispielsweise zu verstärktem Polymerabbau, zu Vernetzungsreaktionen, zu Ausgasungen oder Verfärbungen kommen.
Polyamide werden z. B. durch kleine Mengen von Kupferhalogeniden sowie aromatischen Aminen und sterisch gehinderten Phenole stabilisiert, wobei die Erzielung einer langfristigen Stabilität bei hohen Dauergebrauchstemperaturen im Vordergrund steht (H. Zweifel (Ed.): "Plastics Additives Handbook", 5th Edition, Carl Hanser Verlag, München, 2000, Seiten 80 bis 84).

Insbesondere für thermoplastische Polymere haben sich die Salze von Phosphinsäuren (Phosphinate) als wirksame flammhemmende Zusätze erwiesen (DE-A-2 252 258 und DE-A-2 447 727). Calcium- und Aluminiumphosphinate sind in Polyestern als besonders effektiv wirksam beschrieben worden und beeinträchtigen die Materialeigenschaften der Polymerformmassen weniger als z. B. die Alkalimetallsalze (EP-A-0 699 708). Darüber hinaus wurden synergistische Kombinationen von Phosphinaten mit bestimmten stickstoffhaltigen Verbindungen gefunden, die in einer ganzen Reihe von Polymeren als Flammschutzmittel effektiver wirken als die Phosphinate allein (PCT/EP97/01664 sowie DE-A-19 734 437 und DE-A-19 737 727).

Polymerformmassen mit phosphorhaltigen Flammschutzmitteln können mit Carbodiimiden, Isocyanaten und Isocyanuraten stabilisiert werden (DE-A-19 920 276).

Insbesondere bei der Verwendung phosphorhaltiger Flammschutzmittel in Polyamiden erwies sich die Wirkung der bisher beschriebenen Stabilisatoren als unzureichend, speziell um die bei der Verarbeitung auftretenden Effekte wie Verfärbung und Molekulargewichtsabbau zu unterdrücken.

Die DE-A-19 614 424 beschreibt Phosphinate in Verbindung mit Stickstoffsynergisten in Polyestern und Polyamiden. Die DE-A-19 933 901 beschreibt Phosphinate in Kombination mit Melaminpolyphosphat als Flammschutzmittel für Polyester und Polyamide. Bei der Verwendung dieser sehr wirksamen Flammschutzmittel kann es aber zu partiellem Polymerabbau sowie zu Verfärbungen des Polymers, insbesondere bei Verarbeitungstemperaturen oberhalb von 300 °C, sowie zu Ausblühungen bei feucht-warm Lagerungen kommen.

Die EP-A-0 964 886 beschreibt flammgeschützte Polyester- und Polyamidformmassen, die als Flammschutzmittel ein Aluminiumphosphinat in Kombination mit einem Aluminiumhydroxid, einem Aluminiumphosphat und/oder einem Aluminiumphosphonat enthalten. In einem Polybutylenterephthalat mit 30 % Glasfasern wird in 20 % Dosierung der Flammschutzmittelmischung mit Aluminiumphosphinat und Aluminiumhydroxid UL 94 V-2 erreicht, mit Aluminiumphosphinat und Aluminiumphosphat UL 94 V-1 und mit Aluminiumphosphinat und Aluminiummonomethylphosphonat V-0. Die gemessene Bruchdehnung beträgt 1,2 %. Für technische Anwendungen im Spritzguss sind aber wesentlich höhere Bruchdehnungen von mindestens 2 % erforderlich, damit die Auswerferstifte der Spritzgussmaschinen nicht die Bauteile beschädigen.

Es war daher Aufgabe der vorliegenden Erfindung, Flammschutzmittel-Stabilisator-Kombinationen für thermoplastische Kunststoffe, insbesondere für Polyamide und Polyester, zur Verfügung zu stellen, die neben der Flammwidrigkeit auch gute mechanische Werte sowie geringen Polymerabbau aufweisen, eine stabilisierende Wirkung auf den Kunststoff ausüben, nicht zu Formbelägen führen und nicht zu Ausblühen aus den Kunststoffen. Außerdem führen die erfindungsgemäßen Flammschutzmittel-Stabilisator-Kombinationen zu besseren Werten bei der Bruchdehnung.

Gelöst wird diese Aufgabe durch eine Mischung aus einem Salz einer Dialkylphosphinsäure (Komponente A) mit einem Salz der phosphorigen Säure (auch als Phosphonsäure bezeichnet) HP(=O)(OH)₂ (Komponente B) sowie gegebenenfalls eines oder mehrere weiterer Stickstoff- oder Phosphor-Stickstoffhaltigen Flammschutzmitteln (Komponente C) und gegebenenfalls weiteren Komponenten. 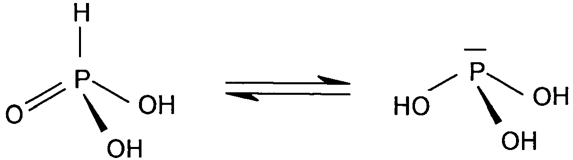 Phosphorige Säure, tautomere Formen (im Nachfolgenden definiert als Komponente B mit der Formel (III) [HP(=O)(O₂]²⁻M^{m+}.

Gegenstand der Erfindung ist daher eine Flammschutzmittel- Stabilisator-Kombination für thermoplastische Polymere, enthaltend als Komponente A 20 bis 99 Gew.-% eines Dialkylphosphinsäuresalzes der Formel (I) und/oder eines Diphosphinsäuresalzes der Formel (II) und/oder deren Polymere, 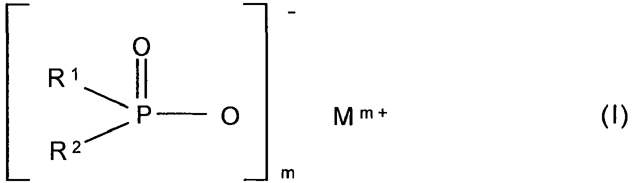 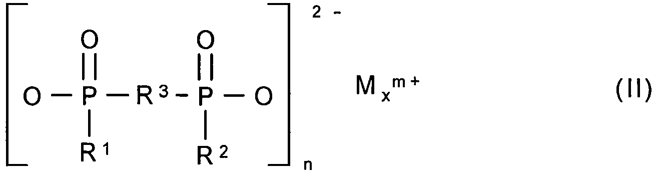 worin
- R¹.R²: aleich oder verschieden sind und Methyl, Ethyl, n-Propyl, iso-Propyl, n-Butyl, tert.-Butyl, n-Pentyl und/oder Phenyl;
- R³: C₁-C₁₀-Alkylen, linear oder verzweigt, C₆-C₁₀-Arylen, C₇-C₂₀ -Alkylarylen oder C₇-C₂₀-Arylalkylen;
- M: Mg, Ca, Al, Sb, Sn, Ge, Ti, Zn, Fe, Zr, Ce, Bi, Sr, Mn, Li, Na, K und/oder eine protonierte Stickstoffbase;
- m: 1 bis 4;
- n: 1 bis 4;
- x: 1 bis 4
bedeuten,
als Komponente B 1 bis 80 Gew.-% eines Salzes der phosphorigen Säure mit der allgemeinen Formel (III)

[HP(=O)O₂]²⁻M^{m+} (III)

worin
- M: Mg, Ca, Al, Sb, Sn, Ge, Ti, Zn, Fe, Zr, Ce, Bi, Sr, Mn, Li, Na und/oder K und
- m: 1 bis 4
bedeuten,
als Komponente C 0 bis 30 Gew.-% eines stickstoffhaltigen Synergisten und/oder eines Phosphor/Stickstoff Flammschutzmittels,
als Komponente D 0 bis 10 Gew.-% eines Zinksalzes und/oder eines basischen und/oder amphoteren Oxides, Hydroxides, Carbonates, Silikates, Borates, Stannates, gemischten Oxid-Hydroxides, Oxid-Hydroxid-Carbonates, Hydroxid-Silikates und/oder Hydroxid-Borates und/oder Mischungen dieser Stoffe,
als Komponente E 0 bis 3 Gew.-% eines Phosphonits und/oder einer Mischung aus einem Phosphonit und einem Phosphit und als Komponente F 0 bis 3 Gew.-% eines Esters und/oder Salzes von langkettigen aliphatischen Carbonsäuren (Fettsäuren), die typischerweise Kettenlängen von C₁₄ bis C₄₀ aufweisen, wobei die Summe der Komponenten immer 100 Gew.-% beträgt.

Überraschenderweise wurde gefunden, dass erfindungsgemäße Kombinationen von Salzen der Dialkylphosphinsäuren mit Salzen der phosphorigen Säure eine gute Flammschutzwirkung aufweisen kombiniert mit einer verbesserten Stabilität bei der Einarbeitung in die Polymere. Der Polymerabbau wird verhindert bzw. sehr stark reduziert und es werden keine Formbeläge und keine Ausblühungen beobachtet. Die erfindungsgemäßen Kombinationen reduzieren zudem die Verfärbung der Kunststoffe bei der Verarbeitung in der Schmelze und unterdrücken den Abbau der Kunststoffe zu Einheiten mit geringerem Molekulargewicht.

Bevorzugt bedeutet R³ Methylen, Ethylen, n-Propylen, iso-Propylen, n-Butylen, tert.-Butylen, n-Pentylen, n-Octylen oder n-Dodecylen; Phenylen oder Naphthylen; Methylphenylen, Ethylphenylen, tert.-Butylphenylen, Methylnaphthylen, Ethylnaphthylen oder tert.-Butylnaphthylen; Phenylmethylen, Phenylethylen, Phenylpropylen oder Phenylbutylen.

### Bevorzugt enthält die Flammschutzmittel- Stabilisator-Kombination

| | | | |
|---|---|---|---|
| 60 | bis | 89,9 | Gew.-% Komponente A, |
| 10 | bis | 40 | Gew.-% Komponente B, |
| 0 | bis | 30 | Gew.-% Komponente C, |
| 0 | bis | 15 | Gew.-% Komponente D, |
| 0 | bis | 2 | Gew.-% Komponente E und |
| 0,1 | bis | 2 | Gew.-% Komponente F. |

### Bevorzugt enthält die Flammschutzmittel- Stabilisator-Kombination auch

| | | | |
|---|---|---|---|
| 60 | bis | 84,9 | Gew.-% Komponente A, |
| 10 | bis | 40 | Gew.-% Komponente B, |
| 5 | bis | 30 | Gew.-% Komponente C, |
| 0 | bis | 10 | Gew.-% Komponente D, |
| 0 | bis | 2 | Gew.-% Komponente E und |
| 0,1 | bis | 2 | Gew.-% Komponente F. |

### Bevorzugt enthält die Flammschutzmittel-Stabilisator-Kombination auch

| | | | |
|---|---|---|---|
| 60 | bis | 84,8 | Gew.-% Komponente A, |
| 10 | bis | 40 | Gew.-% Komponente B, |
| 5 | bis | 30 | Gew.-% Komponente C, |
| 0 | bis | 10 | Gew.-% Komponente D, |
| 0,1 | bis | 2 | Gew.-% Komponente E und |
| 0,1 | bis | 2 | Gew.-% Komponente F. |

Bevorzugt handelt es sich bei der Komponente B um Umsetzungsprodukte von phosphoriger Säure mit Aluminiumverbindungen.

Bevorzugt handelt es sich bei der Komponente B um Aluminiumphosphit [Al(H2PO₃)₃], sekundäres Aluminiumphosphit [Al₂(HPO₃)₃], basisches Aluminiumphosphit [Al(OH)(H₂PO₃)₂*2aq], Aluminiumphosphittetrahydrat [Al₂(HPO₃)₃*4aq], Aluminiumphosphonat, Al₇(HPO₃)₉(OH)₆(1,6-Hexandiamin)_{1,5}*12H₂O, Al₂(HPO₃)³*xAl₂O₃*nH₂O mit x = 2,27 - 1 und/oder Al₄H₆P₁₆O₁₈.

Bevorzugt handelt es sich bei der Komponente C um Kondensationsprodukte des Melamins und/oder um Umsetzungsprodukte von Melamin mit Polyphosphorsäure und/oder um Umsetzungsprodukte von Kondensationsprodukten des Melamins mit Polyphosphorsäure oder Gemische davon.

Bevorzugt handelt es sich bei der Komponente C um Melem, Melam, Melon, Dimelaminpyrophosphat, Melaminpolyphosphat, Melempolyphosphat, Melampolyphosphat, Melonpolyphosphat und/oder gemischte Polysalze davon.

Bevorzugt handelt es sich bei der Komponente C um stickstoffhaltige Phosphate der Formeln (NH₄)_{y} H_{3-y} PO₄ bzw. (NH₄ PO₃)_{z}, mit y gleich 1 bis 3 und z gleich 1 bis 10.000.

Bevorzugt handelt es sich bei der Komponente D um Magnesiumoxid, Calciumoxid, Aluminiumoxid, Zinkoxid, Manganoxid, Zinnoxid, Aluminiumhydroxid, Böhmit, Dihydrotalcit, Hydrocalumit, Magnesiumhydroxid, Calciumhydroxid, Zinkhydroxid, Zinnoxidhydrat, Manganhydroxid, Zinkborat, basisches Zink-Silikat und/oder Zinkstannat handelt.

Bevorzugt handelt es sich bei den Phosphoniten um solche der allgemeinen Struktur

R-[P(OR₁)₂]ₘ (IV)

wobei
- R: ein ein- oder mehrwertiger aliphatischer, aromatischer oder hetero-aromatischer organischer Rest ist und
- R₁: eine Verbindung der Struktur (V) 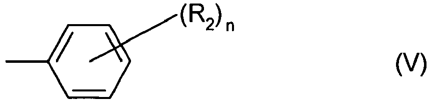
ist oder die beiden Reste R₁ eine verbrückende Gruppe der Struktur (VI) bilden 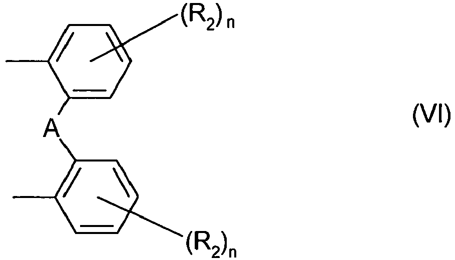 mit
- A: direkter Bindung, O, S, C₁-C₁₈-Alkylen (linear oder verzweigt), C₁-C₁₈-Alkyliden (linear oder verzweigt), in denen
- R₂: unabhängig voneinander C₁-C₁₂-Alkyl (linear oder verzweigt), C₁-C₁₂-Alkoxy, C₅-C₁₂-Cycloalkyl bedeuten und
- n: 0 bis 5 sowie
- m: 1 bis 4 bedeutet.
Bevorzugt handelt es sich bei der Komponente F um Alkali-, Erdalkali-, Aluminium- und/oder Zinksalze von langkettigen Fettsäuren mit 14 bis 40 C-Atomen und/oder um Umsetzungsprodukte von langkettigen Fettsäuren mit 14 bis 40 C-Atomen mit mehrwertigen Alkoholen, wie Ethylenglykol, Glycerin, Trimethylolpropan und/oder Pentaerythrit.

Die Erfindung betrifft auch eine flammfest ausgerüstete Kunststoff-Formmasse, enthaltend eine Flammschutzmittel-Stabilisator-Kombination gemäß einem oder mehreren der Ansprüche 1 bis 14, dadurch gekennzeichnet, dass es sich bei dem Kunststoff um thermoplastischen Polymere und/oder Elastomere der Art Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol) oder PPE/HIPS (Polyphenylenether/Polystyrol-HI) Kunststoffe handelt und dass sie die Flammschutzmittel-Stabilisator-Kombination der Ansprüche 1 bis 14 in einer Menge von 2 bis 50 Gew.-%, bezogen auf die Kunststoff-Formmasse, enthält.

Die Erfindung betrifft ebenfalls Polymer-Formkörper, -Filme, -Fäden und -Fasern enthaltend eine Flammschutzmittel-Stabilisator-Kombination gemäß einem oder mehreren der Ansprüche 1 bis 14, dadurch gekennzeichnet, dass es sich bei dem Polymeren um Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol), Polyamid, Polyester und/oder ABS und/oder Elastomere handelt und dass sie die Flammschutzmittel-Stabilisator-Kombination der Ansprüche 1 bis 14 in einer Menge von 2 bis 50 Gew.-%, bezogen auf die Polymer-Formkörper, -Filme, -Fäden und -Fasern, enthält.

Besonders bevorzugt handelt es sich bei dem Kunststoff bzw. dem Polymer um Polyamide und/oder Polyester.

Bevorzugte Salze der phosphorigen Säure (Komponente B) sind in Wasser unlösliche bzw. schwerlösliche Salze.

Besonders bevorzugte Salze der phosphorigen Säure sind Aluminium-, Calcium- und Zinksalze.

Besonders bevorzugt handelt es sich bei Komponente B um ein Umsetzungsprodukt aus Phosphoriger Säure und einer Aluminiumverbindung.

Bevorzugt sind Aluminiumphosphite mit den CAS-Nummern 15099-32-8, 119103-85-4, 220689-59-8, 56287-23-1, 156024-71-4, 71449-76-8 und 15099-32-8

Bevorzugt sind Aluminiumphosphite des Typs Al₂(HPO₃)₃ * 0,1-30 Al₂O₃ * 0-50 H₂O, besonders bevorzugt Al₂(HPO₃)₃ * 0,2-20 Al₂O₃ * 0-50 H₂O, ganz besonders bevorzugt Al₂(HPO₃)₃ * 1-3 Al₂O₃ * 0-50 H₂O.

Bevorzugt sind Mischungen von Aluminiumphosphit und Aluminiumhydroxid der Zusammensetzung 5 - 95 Gew.-% Al₂(HPO₃)₃*nH₂O und 95 - 5 Gew.-% Al(OH)₃, besonders bevorzugt 10 - 90 Gew.-% Al₂(HPO₃)₃*nH₂O und 90 - 10 Gew.-% Al(OH)₃, ganz besonders bevorzugt 35 - 65 Gew.-% Al₂(HPO₃)₃*nH₂O und 65 - 35 Gew.-% Al(OH)₃ und jeweils n = 0 bis 4

Bevorzugt haben die Aluminiumphosphite Teilchengrößen von 0,2 bis 100 µm.

Die Herstellung der bevorzugten Aluminiumphosphite erfolgt üblicherweise durch Umsetzung einer Aluminiumquelle mit einer Phosphorquelle und wahlweise einem Templat in einem Lösungsmittel bei 20 bis 200 °C während einer Zeitspanne von bis zu 4 Tagen. Aluminiumquelle und Phosphorquelle werden dazu vermischt, unter hydrothermalen Bedingungen oder am Rückfluss erhitzt, abfiltriert, gewaschen und getrocknet.

Bevorzugte Aluminumquellen sind Aluminiumisopropoxid, Aluminiumnitrat, Aluminiumchlorid, Aluminiumhydroxid (z. B. Pseudoböhmit).

Bevorzugte Phosphorquellen sind Phosphorige Säure, (saures) Ammoniumphosphit, Alkaliphosphite oder Erdalkaliphosphite.

Bevorzugte Alkaliphosphite sind Dinatriumphosphit, Dinatriumphosphithydrat, Trinatriumphosphit, Kaliumhydrogenphosphit.

Bevorzugtes Dinatriumphosphithydrat ist Brüggolen^{®} H10 der Fa. Brüggemann.

Bevorzugte Template sind 1,6-Hexandiamin, Guanidincarbonat oder Ammoniak.

Bevorzugtes Erdalkaliphosphit ist Calciumphosphit.

Das bevorzugte Verhältnis von Aluminium zu Phosphor zu Lösungsmittel ist dabei 1 : 1 : 3,7 bis 1 : 2,2 : 100 mol. Das Verhältnis von Aluminum zu Templat ist 1 : 0 bis 1 : 17 mol.

Der bevorzugte pH-Wert der Reaktionslösung ist 3 bis 9.

Bevorzugtes Lösungsmittel ist Wasser.

### Erfindungsgemäß sind auch Flammschutzmittel-Stabilisator-Kombinationen mit

| | | | |
|---|---|---|---|
| 50 | bis | 95 | Gew.-% Komponente A, |
| 5 | bis | 50 | Gew.-% Komponente B, |
| 0 | bis | 30 | Gew.-% Komponente C, |
| 0 | bis | 15 | Gew.-% Komponente D, |
| 0 | bis | 2 | Gew.-% Komponente E und |
| 0 | bis | 2 | Gew.-% Komponente F. |

### Erfindungsgemäß sind auch Flammschutzmittel-Stabilisator-Kombinationen mit

| | | | |
|---|---|---|---|
| 50 | bis | 94,9 | Gew.-% Komponente A, |
| 5 | bis | 50 | Gew.-% Komponente B, |
| 0 | bis | 30 | Gew.-% Komponente C, |
| 0 | bis | 15 | Gew.-% Komponente D, |
| 0 | bis | 2 | Gew.-% Komponente E und |
| 0,1 | bis | 2 | Gew.-% Komponente F. |

### Erfindungsgemäß sind auch Flammschutzmittel-Stabilisator-Kombinationen mit

| | |
|---|---|
| 50 bis 94,8 | Gew.-% Komponente A, |
| 5 bis 50 | Gew.-% Komponente B, |
| 0 bis 30 | Gew.-% Komponente C, |
| 0 bis 15 | Gew.-% Komponente D, |
| 0,1 bis 2 | Gew.-% Komponente E und |
| 0,1 bis 2 | Gew.-% Komponente F. |

### Erfindungsgemäß sind auch Flammschutzmittel-Stabilisator-Kombinationen mit

| | |
|---|---|
| 50 bis 94,8 | Gew.-% Komponente A, |
| 5 bis 30 | Gew.-% Komponente B, |
| 5 bis 20 | Gew.-% Komponente C, |
| 0 bis 15 | Gew.-% Komponente D, |
| 0,1 bis 2 | Gew.-% Komponente E und |
| 0,1 bis 2 | Gew.-% Komponente F. |

### Erfindungsgemäß sind auch Flammschutzmittel-Stabilisator-Kombinationen mit

| | |
|---|---|
| 50 bis 94,7 | Gew.-% Komponente A, |
| 5 bis 30 | Gew.-% Komponente B, |
| 5 bis 20 | Gew.-% Komponente C, |
| 0,1 bis 15 | Gew.-% Komponente D, |
| 0,1 bis 2 | Gew.-% Komponente E und |
| 0,1 bis 2 | Gew.-% Komponente F. |

Bevorzugt handelt es sich bei Komponente C um Melamincyanurat.

Bevorzugt handelt es sich bei der Komponente C um Ammoniumhydrogenphosphat, Ammoniumdihydrogenphosphat und/oder Ammoniumpolyphosphat.

Geeignete Komponenten C sind auch Verbindungen der Formeln (VII) bis (XII) oder Gemische davon 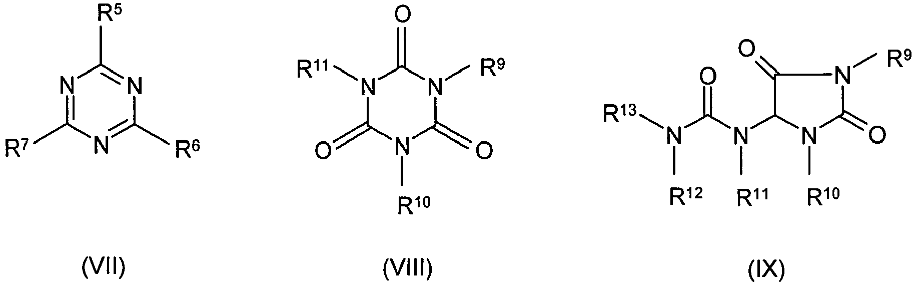 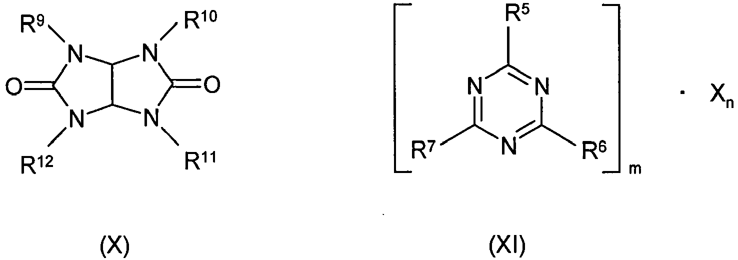 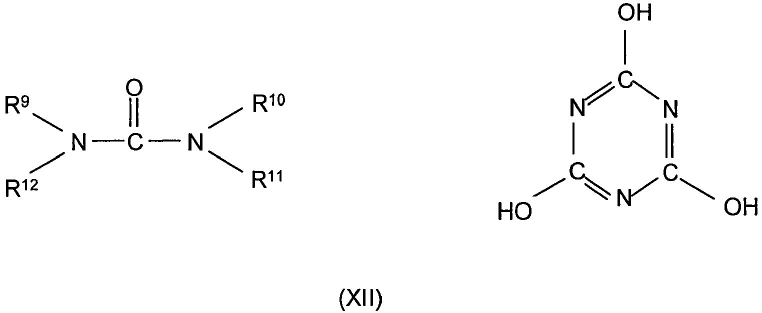 worin
- R⁵ bis R⁷: Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder -Arylalkyl, -OR⁸ und -N(R⁸)R⁹, sowie N-alicyclisch oder N-aromatisch,
- R⁸: Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder -Arylalkyl,
- R⁹ bis R¹³: die gleichen Gruppen wie R⁸ sowie -O-R⁸,
- m und n: unabhängig voneinander 1, 2, 3 oder 4,
- X: Säuren, die Addukte mit Triazinverbindungen (VII) bilden können,
bedeuten; oder um oligomere Ester des Tris(hydroxyethyl)isocyanurats mit aromatischen Polycarbonsäuren

Besonders geeignete Komponenten C sind Benzoguanamin, Tris(hydroxyethyl)isocyanurat, Allantoin, Glycouril, Melamin, Melamincyanurat, Dicyandiamid und/oder Guanidin.

Besonders bevorzugt handelt es sich bei der Komponente D um Böhmit, Dihydrotalcit, Zinkborat und/oder Zinkstannat.

Bevorzugt bedeutet M Calcium, Aluminium oder Zink.

Unter protonierten Stickstoffbasen werden bevorzugt die protonierten Basen von Ammoniak, Melamin, Triethanolamin, insbesondere NH₄⁺, verstanden.

Geeignete Phosphinate sind in der PCT/WO97/39053 beschrieben, auf die ausdrücklich Bezug genommen wird.

Besonders bevorzugte Phosphinate sind Aluminium-, Calcium- und Zinkphosphinate.

Besonders bevorzugt wird in der Anwendung das gleiche Salz der Phosphinsäure wie der phosphorigen Säure verwendet, also z. B. Aluminiumdialkylphosphinat zusammen mit Aluminiumphosphit oder Zinkdialkylphosphinat zusammen mit Zinkphosphit.

Der erfindungsgemäßen Kombination aus den Komponenten A und B sowie ggf. C, D, E und F können Additive zugesetzt werden, wie z. B. Antioxidantien, UV-Absorber und Lichtschutzmittel, Metalldesaktivatoren, Peroxid-zerstörende Verbindungen, Polyamidstabilisatoren, basische Co-Stabilisatoren, Nukleierungsmittel, Füllstoffe, Verstärkungsmittel, weitere Flammschutzmittel sowie sonstige Zusätze.

Geeignete Antioxidantien sind beispielsweise alkylierte Monophenole, z. B. 2,6-Ditert-butyl-4-methylphenol; 1,2-Alkylthiomethylphenole, z. B. 2,4-Di-octylthiomethyl-6-tert-butylphenol; Hydrochinone und alkylierte Hydrochinone, z. B. 2,6-Di-tert-butyl-4-methoxyphenol; Tocopherole, z. B. α-Tocopherol, β-Tocopherol, γ-Tocopherol, δ-Tocopherol und Mischungen davon (Vitamin E); Hydroxylierte Thiodiphenylether, z. B. 2,2'-Thio-bis(6-tert-butyl-4-methylphenol), 2,2'-Thio-bis(4-octylphenol), 4,4'-Thio-bis-(6-tert-butyl-3-methylphenol), 4,4'-Thio-bis-(6-tert-butyl-2-methylphenol), 4,4'-Thio-bis-(3,6-di-sec.-amylphenol), 4,4'-Bis-(2,6-di-methyl-4-hydroxyphenyl)-disulfic; Alkyliden-Bisphenole, z. B. 2,2'-Methylen-bis-(6-tert-butyl-4-methylphenol;
O-, N- und S-Benzylverbindungen, z. B. 3,5,3',5'-Tetra-tert-butyl-4,4'-dihydroxydibenzylether; hydroxybenzylierte Malonate, z. B. Dioctadecyl-2,2-bis-(3,5-di-tert-butyl-2-hydroxybenzyl)-malonat; Hydroxybenzyl-Aromaten, z. B. 1,3,5-Tris-(3,5-ditert-buty)-4-hydroxybenzyl)-2,4,6-trimethylbenzo1, 1,4-Bis-(3,5-di-tert-butyl-4-hydroxybenzyl)-2,3,5,6-tetramethylbenzol 2,4,6-Tris-(3,5-di-tert-buryl-4-hydroxybenzyl)-phenol; Triazinverbindungen, z. B. 2,4-Bis-octylmercapto-6(3,5-ditert-butyl-4-hydroxyanilino)-1,3,5-triazin; Benzylphosphonate, z. B. Dimethyl-2,5-di-tert-butyl-4-hydroxybenzylphosphonat; Acylaminophenole, 4-Hydroxylaurinsäureamid, 4-Hydroxystearinsäureanilid, N-(3,5-di-tert-butyl-4-hydroxyphenyl)-carbaminsäureoctylester; Ester der β-(3.5-Di-tert-butyl-4-hydroxyphenyl)-propionsäure mit ein- oder mehrwertigen Alkoholen; Ester der β-(5-tert-Butyl-4-hydroxy-3-methylphenyl)-propionsäure mit ein- oder mehrwertigen Alkoholen; Ester der β-(3,5-Dicyclohexyl-4-hydroxyphenyl)-propionsäure mit ein- oder mehrwertigen Alkoholen; Ester der 3,5-Di-tert-butyl-4-hydroxyphenylessigsäure mit ein- oder mehrwertigen Alkoholen; Amide der β-(3,5-Di-tert-butyl-4-hydroxyphenyl)-propionsäure, wie z. B. N,N'-Bis-(3,5-di-tert-butyl-4-hydroxyphenylpropionyl)-hexamethylendiamin, N,N'-Bis-(3,5-di-tert-butyl-4-hydroxyphenylpropionyl)-trimethylendiamin, N,N'-Bis-(3,5-di-tert-butyl-4-hydroxyphenylpropionyl)-hydrazin.

Geeignete UV-Absorber und Lichtschutzmittel sind beispielsweise 2-(2'-Hydroxyphenyl)-benzotriazole, wie z. B. 2-(2'-Hydroxy-5'-methylphenyl)-benzotriazol;
2-Hydroxybenzophenone, wie z. B. das 4-Hydroxy, 4-Methoxy, 4-Octoxy, 4-Decyloxy-, 4-Dodecyloxy-, 4-Benzyloxy-, 4,2',4-Trihydroxy-, 2'-Hydroxy-4,4'-dimethoxy-Derivat;
Ester von gegebenenfalls substituierten Benzoesäuren, wie z. B. 4-tert-Butylphenylsalicylat, Phenylsalicylat, Octylphenylsalicylat, Dibenzoylresorcin, Bis-(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäureoctadecylester, 3,5-Di-tert-butyl-4-hydroxybenzoesäure-2-methyl-4,6-di-tert-butylphenylester; Acrylate, wie z. B. α-Cyan-β,β-diphenylacrylsäureethylester bzw. -isooctylester,
α-Carbomethoxyzimtsäuremethylester, α-Cyano-β-methyl-p-methoxyzimtsäuremethylester bzw. -butylester, α-Carbomethoxy-p-methoxyzimtsäuremethylester, N-(β-Carbo-methoxy-β-cyanovinyl)-2-methyl-indolin.

Weiterhin Nickelverbindungen, wie z. B. Nickelkomplexe des 2,2'-Thio-bis-[4(1,1,3,3-tetramethylbutyl)phenols], wie der 1:1- oder der 1:2-Komplex, gegebenenfalls mit zusätzlichen Liganden, wie n-Butylamin, Triethanolamin oder N-Cyclohexyldiethanolamin, Nickeldibutyldithiocarbamat, Nickelsalze von 4-Hydroxy-3,5-di-tert-butylbenzylphosphonsäuremonoalkylestern, wie vom Methyl-oder Ethylester, Nickelkomplexe von Ketoximen, wie von 2-Hydroxy-4-methylphenylundecylketoxim, Nickelkomplexe des 1-Phenyl-4-lauroyl-5-hydroxypyrazols, gegebenenfalls mit zusätzlichen Liganden; sterisch gehinderte Amine, wie z. B. Bis-(2,2,6,6-tetramethylpiperidyl)-sebacat; Oxalsäurediamide, wie z. B. 4,4'-Di-octyloxyoxanilid; 2-(2-Hydroxyphenyl)-1,3,5-triazine, wie z. B. 2,4,6-Tris(2-hydroxy-4-octyloxyphenyl)-1,3,5-triazin.

Geeignete Metalldesaktivatoren sind z. B. N,N' -Diphenyloxalsäurediamid, N-Salicylal-N'-salicyloylhydrazin, N,N'-Bis-(salicyloyl)-hydrazin, N,N'-Bis-(3,5-di-tert-butyl-4-hydroxyphenylpropionyl)-hydrazin, 3-Salicyloylamino-1,2,4-triazol, Bis-(benzyliden)-oxalsäuredihydrazid, Oxanilid, Isophthalsäuredihydrazid, Sebacinsäure-bis-phenylhydrazid, N,N'-Diacetyl-adipinsäuredihydrazid, N,N'-Bis-salicyloyloxalsäuredihydrazid, N,N'-Bis-salicyloylthiopropionsäuredihydrazid.

Geeignete peroxidzerstörende Verbindungen sind z. B. Ester der β-Thio-dipropionsäure, beispielsweise der Lauryl-, Stearyl-, Myristyl- oder Tridecylester; Mercaptobenzimidazol, das Zinksalz des 2-Mercaptobenzimidazols, Zinkdibutyldithiocarbamat, Dioctadecyldisulfid, Pentaerythrit-tetrakis-(β-dodecylmercapto)-propionat.

Geeignete Polyamidstabilisatoren sind z. B. Kupfersalze in Kombination mit Jodiden und/oder Phosphorverbindungen sowie Salze des zweiwertigen Mangans.

Geeignete basische Co-Stabilisatoren sind Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Behenat, Mg-Stearat, Na-Ricinoleat, K-Palmitat, Antimonbrenzcatechinat oder Zinnbrenzcatechinat.

Geeignete Nukleierungsmittel sind z. B. 4-tert-Butylbenzoesäure, Adipinsäure und Diphenylessigsäure.

Zu den Füllstoffen und Verstärkungsmitteln gehören z. B. Calciumcarbonat, Silikate, Glasfasern, Asbest, Talk, Kaolin, Glimmer, Bariumsulfat, Metalloxide und -hydroxide, Russ, Graphit und andere.

Als weitere Flammschutzmittel sind z. B. Arylphosphate, Phosphonate, Salze der Hypophosphorigen Säure sowie roter Phosphor geeignet.

Zu den sonstigen Zusätzen zählt man z. B. Weichmacher, Blähgraphit, Gleitmittel, Emulgatoren, Pigmente, optische Aufheller, Flammschutzmittel, Antistatika, Treibmittel.

Diese zusätzlichen Additive können vor, zusammen mit oder nach Zugabe der Flammschutzmittel den Polymeren zugegeben werden. Die Dosierung sowohl dieser Additive wie auch die der Flammschutzmittel kann dabei als Feststoff, in Lösung oder Schmelze sowie auch in Form von festen oder flüssigen Mischungen oder als Masterbatches/Konzentrate erfolgen.

Bevorzugt sind bei den Phosphoniten die Reste
- R: C₄₋C₁₈-Alkyl (linear oder verzweigt), C₄₋C₁₈-Alkylen (linear oder verzweigt), C₅₋C₁₂-Cycloalkyl, C₅₋C₁₂-Cycloalkylen, C₆₋C₂₄-Aryl bzw. Heteroaryl, C₆₋C₂₄-Arylen bzw. Heteroarylen, welche auch weiter substituiert sein können;
- R₁: eine Verbindung der Struktur (IX) oder (X) mit
- R₂: unabhängig voneinander C₁₋C₈-Alkyl (linear oder verzweigt), C₁₋C₈-Alkoxy, Cyclohexyl;
- A: direkte Bindung, O, C₁₋C₈-Alkylen (linear oder verzweigt), C₁₋C₈-Alkyliden (linear oder verzweigt) und
- n: 0 bis 3
- m: 1 bis 3.

Besonders bevorzugt bei den Phosphoniten sind die Reste
- R: Cyclohexyl, Phenyl, Phenylen, Biphenyl und Biphenylen
- R₁: eine Verbindung der Struktur (IX) oder (X) mit
- R₂: unabhängig voneinander C₁₋C₈-Alkyl (linear oder verzweigt), C₁₋C₈-Alkoxy, Cyclohexyl
- A: direkte Bindung, O, C₁₋C₆-Alkyliden (linear oder verzweigt) und
- n: 1 bis 3
- m: 1 oder 2.

Weiterhin werden Gemische von Verbindungen gem. obiger Ansprüche in Kombination mit Phosphiten der Formel (XIII)

P(OR₁)₃ (XIII)

beansprucht, wobei R₁ die oben angegebenen Bedeutungen hat.

Insbesonders bevorzugt sind Verbindungen, die, basierend auf obigen Angaben, durch eine Friedel-Crafts-Reaktion eines Aromaten oder Heteroaromaten, wie Benzol, Biphenyl oder Diphenylether mit Phosphortrihalogeniden, bevorzugt Phosphortrichlorid, in Gegenwart eines Friedel-Crafts-Katalysators wie Aluminiumchlorid, Zinkchlorid, Eisenchlorid etc. sowie nachfolgender Reaktion mit den der Strukturen (IX) und (X) zugrunde liegenden Phenolen, hergestellt werden. Dabei werden ausdrücklich auch solche Gemische mit Phosphiten eingeschlossen, die nach der genannten Reaktionssequenz aus überschüssigem Phosphortrihalogenid und den vorstehend beschriebenen Phenolen entstehen.

Aus dieser Gruppe von Verbindungen sind wiederum die nachstehenden Strukturen (XIV) und (XV) bevorzugt: 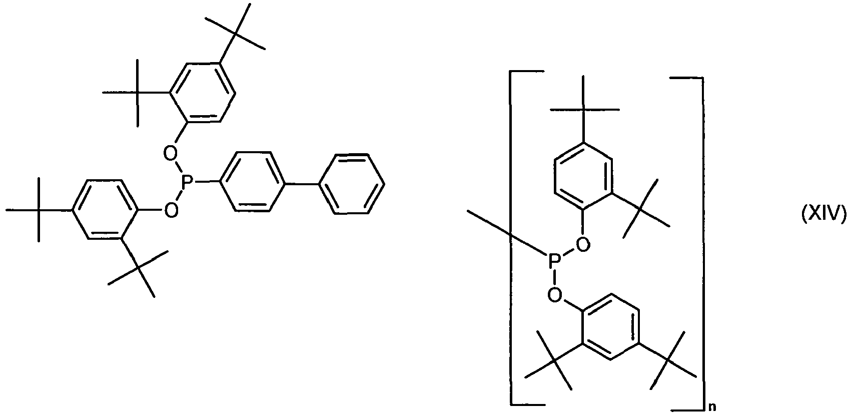 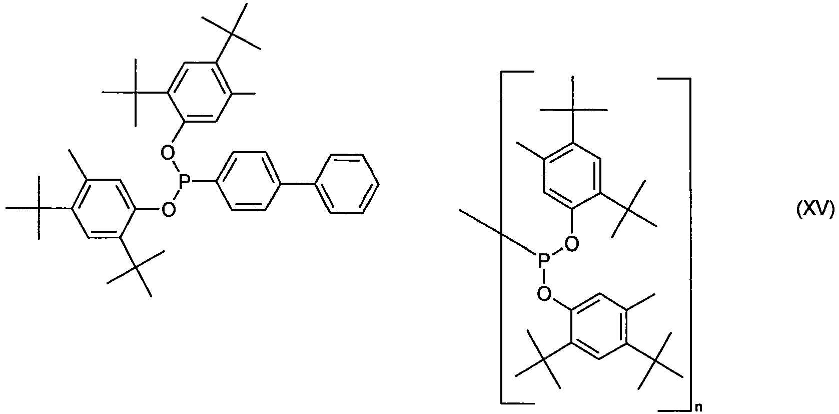 wobei n 0 oder 1 betragen kann und diese Gemische optional weiterhin noch Anteile der Verbindung (XVI) bzw. (XVII) enthalten können:

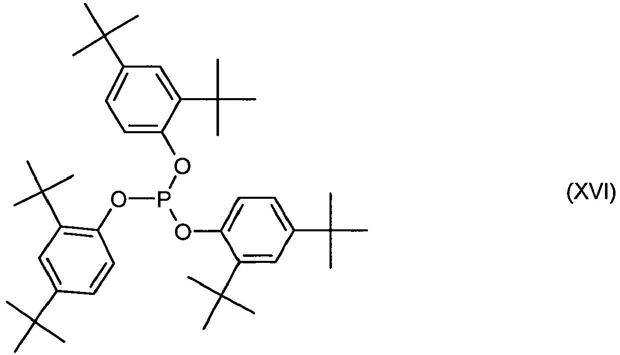

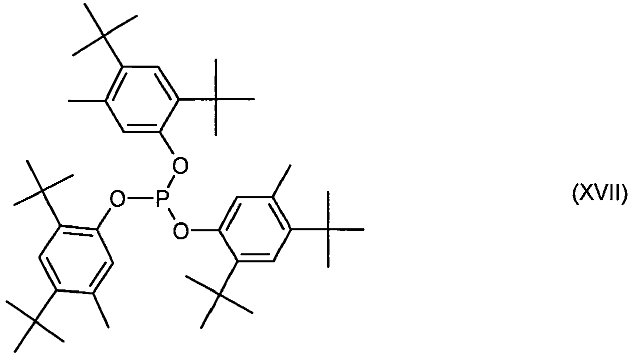

Geeignet als Komponente F sind Ester oder Salze von langkettigen aliphatischen Carbonsäuren (Fettsäuren), die typischerweise Kettenlängen von C₁₄ bis C₄₀ aufweisen. Bei den Estern handelt es sich um Umsetzungsprodukte der genannten Carbonsäuren mit gebräuchlichen mehrwertigen Alkoholen, wie z. B. Ethylenglykol, Glycerin, Trimethylolpropan oder Pentaerythrit. Als Salze der genannten Carbonsäuren kommen vor allem Alkali- oder Erdalkalisalze bzw. Aluminium- und Zinksalze in Betracht.

Bevorzugt handelt es sich bei der Komponente F um Ester oder Salze der Stearinsäure wie z. B. Glycerinmonostearat oder Calciumstearat.

Bevorzugt handelt es sich bei der Komponente F um Umsetzungsprodukte von Montanwachssäuren mit Ethylenglykol.

Bevorzugt handelt es sich bei den Umsetzungsprodukten um eine Mischung aus Ethylenglykol-Mono-Montanwachssäureester, Ethylenglykol-Di-Montanwachssäureester, Montanwachssäuren und Ethylenglykol.

Bevorzugt handelt es sich bei der Komponente F um Umsetzungsprodukte von Montanwachssäuren mit einem Calciumsalz.

Besonders bevorzugt handelt es sich bei den Umsetzungsprodukten um eine Mischung aus 1,3-Budandiol-Mono-Montanwachssäureester, 1,3-Budandiol-Di-Montanwachssäureester, Montanwachssäuren, 1,3-Butandiol, Calciummontanat und dem Calciumsalz.

Die Mengenverhältnisse der Komponenten A, B und ggf. C in der Flammschutzmittel-Stabilisator-Kombination hängen wesentlich vom vorgesehenen Anwendungsgebiet ab und können in weiten Grenzen variieren. Je nach Anwendungsgebiet enthält die Flammschutzmittel-Stabilisator-Kombination 20 bis 99 Gew.-% der Komponente A, 1 bis 80 Gew.-% der Komponente B und 0 bis 30 Gew.-% der Komponente C. Die Komponenten D, E und F werden unabhängig voneinander in 0 bis 3 % zugegeben.

Besonders bevorzugt handelt es sich bei dem Kunststoff um Polyamide, Polyester und PPE/HIPS-Blends.

Bevorzugt wird die Flammschutzmittel-Stabilisator-Kombination in der Kunststoff-Formmasse in einer Gesamtmenge von 2 bis 50 Gew.-%, bezogen auf die Kunststoff-Formmasse, eingesetzt. Die Gesamtmenge der Kunststoff-Formmasse beträgt dann 50 bis 98 Gew.-%.

Besonders bevorzugt wird die Flammschutzmittel-Stabilisator-Kombination in der Kunststoff-Formmasse in einer Gesamtmenge von 10 bis 30 Gew.-%, bezogen auf die Kunststoff-Formmasse, eingesetzt. Die Gesamtmenge der Kunststoff-Formmasse beträgt dann 70 bis 90 Gew.-%.

Bevorzugt enthalten die Polymer-Formkörper, -Filme, -Fäden und -Fasern die Flammschutzmittel-Stabilisator-Kombination in einer Gesamt-Menge von 2 bis 50 Gew.-%, bezogen auf den Polymergehalt. Die Polymermenge beträgt dann 50 bis 98 Gew.-%.

Besonders bevorzugt enthalten die Polymer-Formkörper, -Filme, -Fäden und -Fasern die Flammschutzmittel-Stabilisator-Kombination in einer Gesamt-Menge von 10 bis 30 Gew.-%, bezogen auf den Polymergehalt. Die Polymermenge beträgt dann 70 bis 90 Gew.-%.

Die vorgenannten Additive können in den verschiedensten Verfahrensschritten in den Kunststoff eingebracht werden. So ist es bei Polyamiden oder Polyestern möglich, bereits zu Beginn oder am Ende der Polymerisation/Polykondensation oder in einem folgenden Compoundierprozess die Additive in die Polymerschmelze einzumischen. Weiterhin gibt es Verarbeitungsprozesse, bei denen die Additive erst später zugefügt werden. Dies wird insbesondere beim Einsatz von Pigment- oder Additivmasterbatches praktiziert. Außerdem besteht die Möglichkeit, insbesondere pulverförmige Additive auf das durch den Trocknungsprozess eventuell warme Polymergranulat aufzutrommeln.

Bevorzugt liegt die Flammschutzmittel-Stabilisator-Kombination als Granulat, Schuppen, Feinkorn, Pulver und/oder Micronisat vor.

Bevorzugt liegt die Flammschutzmittel-Stabilisator-Kombination als physikalische Mischung der Feststoffe, als Schmelzmischung, als Kompaktat, als Extrudat oder in Form eines Masterbatches vor.

Die erfindungsgemäße Flammschutzmittel-Stabilisator-Kombination kann in thermoplastischen Polymeren eingesetzt werden.

Geeignete Polyester leiten sich von Dicarbonsäuren und deren Ester und Diolen und/oder von Hydroxycarbonsäuren oder den entsprechenden Lactonen ab. Besonders bevorzugt werden Terephthalsäure und Ethylenglykol, Propan-1,3-diol und Butan-1,3-diol eingesetzt.

Geeignete Polyester sind u.a. Polyethylenterephthalat, Polybutylenterephthalat (Celanex^{®} 2500, Celanex^{®} 2002, Fa Celanese; Ultradur^{®}, Fa. BASF), Poly-1,4-dimethylolcyclohexanterephthalat, Polyhydroxybenzoate sowie Block-Polyetherester, die sich von Polyethern mit Hydroxylendgruppen ableiten; ferner mit Polycarbonaten oder MBS modifizierte Polyester.

Die erfindungsgemäß hergestellten flammgeschützten Polyester-Formmassen werden bevorzugt in Polyester-Formkörpern eingesetzt.

Bevorzugte Polyester-Formkörper sind Fäden, Fasern, Folien und Formkörper selber, die als Dicarbonsäure-Komponente hauptsächlich Terephthalsäure und als Diolkomponente hauptsächlich Ethylenglykol enthalten.

Bevorzugt beträgt der resultierende Phosphorgehalt in aus flammgeschützten Polyester hergestellten Fäden und Fasern 0,1 bis 18, bevorzugt 0,5 bis 15 und bei Folien 0,2 bis 15, bevorzugt 0,9 bis 12 Gew.-%.

Geeignete Polystyrole sind Polystyrol, Poly-(p-methylstyrol) und/oder Poly-(alpha-methylstyrol).

Bevorzugt handelt es sich bei den geeigneten Polystyrolen um Copolymere von Styrol oder alpha-Methylstyrol mit Dienen oder Acrylderivaten, wie z. B. Styrol-Butadien, Styrol-Acrylnitril, Styrol-Alkylmethacrylat, Styrol-Butadien-Alkylacrylat und -Methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z. B. einem Polyacrylat, einem Dien-Polymeren oder einem Ethylen-Propylen-Dien-Terpolymeren; sowie Block-Copolymere des Styrols, wie z. B. Styrol-Butadien-Styrol, Styrol-Isopren-Styrol, Styrol-Ethylen/Butylen-Styrol oder Styrol-Ethylen/Propylen-Styrol.

Bevorzugt handelt es sich bei den geeeigneten Polystyrolen auch um Pfropfcopolymere von Styrol oder alpha-Methylstyrol, wie z. B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen, wie sie z. B. als so genannte ABS-, MBS-, ASA- oder AES-Polymere bekannt sind.

Bevorzugt handelt es sich bei den Polymeren um Polyamide und Copolyamide, die sich von Diaminen und Dicarbonsäuren und/oder von Aminocarbonsäuren oder den entsprechenden Lactamen ableiten, wie Polyamid 2,12, Polyamid 4, Polyamid 4,6, Polyamid 6, Polyamid 6,6, Polyamid 6,9, Polyamid 6,10, Polyamid 6,12, Polyamid 6,66, Polyamid 7,7, Polyamid 8,8, Polyamid 9,9, Polyamid 10,9, Polyamid 10,10, Polyamid 11, Polyamid 12, usw. Diese sind z. B unter den Handelsnamen Nylon^{®}, Fa. DuPont, Ultramid^{®}, Fa. BASF, Akulon^{®} K122, Fa. DSM, Zytel^{®} 7301, Fa. DuPont; Durethan^{®} B 29, Fa. Bayer und Grillamid^{®}, Fa. Ems Chemie bekannt.

Geeignet sind auch aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z. B. Poly-2,4,4-trimethylhexamethylen-terephthalamid oder Poly-m-phenylenisophthalamid, Blockcopolymere der vorstehend genannten Polyamide mit Polyolefinen, Olefin-Copolymeren, lonomeren oder chemisch gebundenen oder gepfropften Elastomeren, oder mit Polyethern, wie z. B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

Die Erfindung betrifft schließlich auch ein Verfahren zur Herstellung von flammgeschützten Polymer-Formkörpern, dadurch gekennzeichnet, dass erfindungsgemäße flammgeschützte Polymer-Formmassen durch Spritzgießen (z. B. Spritzgießmaschine Typ Aarburg Allrounder) und Pressen, Schaumspritzgießen, Gasinnendruck-Spritzgießen, Blasformen, Foliengießen, Kalandern, Laminieren oder Beschichten bei höheren Temperaturen zum flammgeschützten Polymer-Formkörper verarbeitet wird.

Bevorzugt handelt es sich bei den duroplastischen Polymeren um ungesättigte Polyesterharze (UP-Harze), die sich von Copolyestern gesättigter und ungesättigter Dicarbonsäuren oder deren Anhydriden mit mehrwertigen Alkoholen, sowie Vinylverbindungen als Vernetzungsmittel ableiten. UP-Harze werden gehärtet durch radikalische Polymerisation mit Initiatoren (z. B. Peroxiden) und Beschleunigern.

Bevorzugte ungesättigte Dicarbonsäuren und -derivate zur Herstellung der Polyesterharze sind Maleinsäureanhydrid und Fumarsäure.

Bevorzugte gesättigte Dicarbonsäuren sind Phthalsäure, Isophthalsäure, Terephthalsäure, Tetrahydrophthalsäure, Adipinsäure.

Bevorzugte Diole sind 1,2 Propandiol, Ethylenglycol, Diethylenglycol und Neopentylglycol, Neopentylglycol, ethoxyliertes oder propoxyliertes Bisphenol A.

Bevorzugte Vinylverbindung zur Vernetzung ist Styrol.

Bevorzugte Härtersysteme sind Peroxide und Metallcoinitiatoren, z. B. Hydroperoxide und Cobaltoctanoat und/oder Benzoylperoxid und aromatische Amine und/oder UV-Licht und Photosensibilisatoren, z. B. Benzoinether.

Bevorzugte Hydroperoxide sind Di-tert.-butylperoxid, tert.-Butylperoctoat, tert.-Butylperpivalat, tert.-Butylper-2-ethylhexanoat, tert.-Butylpermaleinat, tert.-Butylperisobutyrat, Benzoylperoxid, Diacetylperoxid, Succinylperoxid, p-Chlorbenzoylperoxid und Dicyclohexylperoxiddicarbonat.

Bevorzugt werden Initiatoren in Mengen von 0,1 bis 20 Gew. -%, vorzugsweise 0,2 bis 15 Gew.-%, berechnet auf die Masse aller Comonomeren, eingesetzt.

Bevorzugte Metallcoinitiatoren sind Kobalt-, Mangan-, Eisen-, Vanadium-, Nickel- oder Bleiverbindungen. Bevorzugt werden Metallcoinitiatoren in Mengen von 0,05 bis 1 Gew.-%, berechnet auf die Masse aller Comonomeren, eingesetzt.

Bevorzugte aromatische Amine sind Dimethylanilin, Dimethyl-p-toluol, Diethylanilin und Phenyldiethanolamine.

Ein Verfahren zur Herstellung von flammwidrigen duroplastischen Massen ist dadurch gekennzeichnet, dass man ein duroplastisches Harz mit einer erfindungsgemäßen Flammschutz-Stabilisator-Kombination nach einem oder mehreren der Ansprüche 1 bis 16 und ggf. weiteren Flammschutzmitteln, Synergisten, Stabilisatoren, Additiven und Füll- oder Verstärkungsstoffen vermischt und die resultierende Mischung bei Drücken von 3 bis 10 bar und Temperaturen von 20 bis 60 °C nass presst (Kaltpressung).

Ein weiteres Verfahren zur Herstellung von flammwidrigen duroplastischen Massen ist dadurch gekennzeichnet, dass man ein duroplastisches Harz mit einer erfindungsgemäßen Flammschutz-Stabilisator-Kombination nach einem oder mehreren der Ansprüche 1 bis 16 und ggf. weiteren Flammschutzmitteln, Synergisten, Stabilisatoren, Additiven und Füll- oder Verstärkungsstoffen vermischt und die resultierende Mischung bei Drücken von 3 bis 10 bar und Temperaturen von 80 bis 150 °C nass presst (Warm- oder Heißpressung).

Bevorzugt handelt es sich bei den Polymeren um vernetzte Epoxidharze, die sich von aliphatischen, cycloaliphatischen, heterocyclischen oder aromatischen Glycidylverbindungen ableiten, z. B. von Bisphenol-A-diglycidylethern und Bisphenol-F-di-glycidylethern, die mittels üblichen Härtern und/oder Beschleunigern vernetzt werden.

Geeignete Glycidylverbindungen sind Bisphenol-A-diglycidylester, Bisphenol-F-diglycidylester, Polyglycidylester von Phenol-Formaldehydharzen und Kresol-Formaldehydharzen, Polyglycidylester von Pththal-, Isophthal- und Terephthalsäure sowie von Trimellithsäure, N-Glycidylverbindungen von aromatischen Aminen und heterocyclischen Stickstoffbasen sowie Di- und Polyglycidylverbindungen von mehrwertigen aliphatischen Alkoholen.

Geeignete Härter sind aliphatische, cycloaliphatische, aromatische und heterocyclische Amine oder Polyamine wie Ethylendiamin, Diethylentriamin Triethylentetramin, Propan-1,3-diamin, Hexamethylendiamin, Aminoethylpiperazin, Isophorondiamin, Polyamidoamin, Diaminodiphenylmethan, Diaminodiphenylether, Diaminodiphenolsulfone, Anilin-Formaldehyd-Harze, 2,2,4-Trimethylhexan-1,6-diamin, m-Xylylendiamin, Bis(4-aminocyclohexyl)methan, 2,2-Bis(4-aminocyclohexyl)propan, 3-Aminomethyl-3,55-trimethylcyclohexylamin (Isophorondiamin), Polyamidoamine, Cyanguanidin und Dicyandiamid, ebenso mehrbasige Säuren oder deren Anhydride wie z. B. Phthalsäureanhydrid, Maleinsäureanhydrid, Tetrahydro-phthalsäureanhydrid, Methyltetrahydrophthalsäureanhydrid, Hexahydrophthalsäure-anhydrid und Methylhexahydrophthalsäureanhydrid sowie Phenole wie z. B. Phenol-Novolak-Harz, Cresol-Novolak-Harz, Dicyclopentadien-Phenol-Addukt-Harz, Phenolaralkyl-Harz, Cresolaralkyl-Harz, Naphtholaralkyl Harz, Biphenol-modifiziertes Phenolaralkyl-Harz, Phenoltrimethylolmethan-Harz, Tetraphenylolethan-Harz, Naphthol-Novolak-Harz, Naphthol-Phenol-Kocondensat-Harz, Naphthol-Cresol-Kocondensat-Harz, Biphenol- modifiziertes Phenol-Harz und Aminotriazinmodifiziertes Phenol-Harz. Alle Härter können alleine oder in Kombination miteinander eingesetzt werden.

Geeignete Katalysatoren bzw. Beschleuniger für die Vernetzung bei der Polymerisation sind tertiäre Amine, Benzyldimethylamin, N-Alkylpyridine, Imidazol, 1-Methylimidazol, 2-Methylimidazol, 2-Ethyl-4-methylimidazol, 2-Ethyl-4-methylimidazol, 2-Phenylimidazol, 2-Heptadecylimidazol, Metallsalze organischer Säuren, Lewis Säuren und Amin-Komplex-Salze.

Die Formulierung der Erfindung kann auch andere Additive, die herkömmlich in Epoxidharz-Formulierungen eingesetzt werden, wie Pigmente, Farbstoffe und Stabilisatoren, enthalten.

Epoxidharze sind geeignet zum Verguß von elektrischen bzw. elektronischen Bauteilen und für Tränk- und Imprägnierprozesse. In der Elektrotechnik werden Epoxidharze überwiegend flammwidrig ausgerüstet und für Leiterplatten und Isolatoren eingesetzt.

Bevorzugt handelt es sich bei den Polymeren um vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze. Bevorzugt handelt es sich bei den Polymeren um vernetzbare Acrylharze, die sich von substituierten Acrylsäureestern ableiten, wie z. B. von Epoxyacrylaten, Urethanacrylaten oder Polyesteracrylaten.

Bevorzugt handelt es sich bei den Polymeren um Alkydharze, Polyesterharze und Acrylatharze, die mit Melaminharzen, Harnstoffharzen, Isocyanaten, Isocyanuraten, Polyisocyanaten oder Epoxidharzen vernetzt sind.

Bevorzugte Polyole, sind Alkenoxidaddukte von Ethylenglykol, 1,2-Propandiol, Bisphenol A, Trimethylolpropan, Glycerin, Pentaerythrol, Sorbit, Zucker, abgebaute Stärke, Ethylendiamin, Diaminotoluol und/oder Anilin, die als Initiator dienen. Die bevorzugten Oxyalkylierungsmittel enthalten bevorzugt 2 bis 4 Kohlenstoffatome, besonders bevorzugt sind Ethylenoxid und Propylenoxid.

Bevorzugte Polyester-Polyole werden durch Polykondensation eines Polyalkoholes wie Ethylenglykol, Diethylenglykol, Propylenglykol, 1,4-Butandiol, 1,5-Pentandiol, Methylpentandiol, 1,6-Hexandiol, Trimethylolpropan, Glycerin, Pentaerythritol, Diglycerol, Traubenzucker und/oder Sorbit mit einer dibasischen Säure wie Oxalsäure, Malonsäure, Bernsteinsäure, Weinsäure, Adipinsäure, Sebacinsäure, Maleinsäure, Fumarsäure, Phthalsäure und/oder Terephthalsäure erhalten. Diese Polyester-Polyole können alleine oder in Kombination benutzt werden.

Geeignete Polyisocyanate sind aromatische, alicyclische or aliphatische Polyisocyanate, mit nicht weniger als zwei Isocyanat-Groupen und Mischungen davon. Bevorzugt sind aromatische Polyisocyanate wie Tolyldiisocyanat, Methylendiphenyldiisocyanat, Naphthylendiisocyanate, Xylylendiisocyanat, Tris-4-isocyanatophenyl)methan und Polymethylenpolyphenylendiisocyanate; alicyclische Polyisocyanate wie Methylendiphenyldiisocyanat, Tolyldiisocyanat; aliphatische Polyisocyanate und Hexamethylendiisocyanat, Isophorendiisocyanat, Demeryldiisocyanat, 1,1-Methylenbis(4-isocyanatocyclohexan-4,4'-Diisocyanatodicyclohexyimethan-Isomerengemisch, 1,4-Cyclohexyldiisocyanat, Desmodur^{®}-Typen (Bayer) und Lysindiisocyanat und Mischungen davon. Geeignete Polyisocyanate sind modifizierte Produkte, die durch Reaktion von Polyisocyanat mit Polyol, Harnstoff, Carbodiimid und/oder Biuret erhalten werden.

Bevorzugt ist das Gewichtverhältnis des Polyisocyanats zu Polyol 170 zu 70 Gew.-Teile, vorzugsweise 130 zu 80 Gew.-Teile, bezogen auf 100 Gew.-Teile des Polyols.

Bevorzugt ist das Gewichtverhältnis des Katalysators 0,1 bis 4 Gew.-Teile, besonders bevorzugt 1 bis 2 Gew.-Teile bezogen auf 100 Gew.-Teile des Polyols.

Bevorzugt handelt es sich bei den Polymeren um thermoplastische Elastomere.

Thermoplastische Elastomere (Abkürzung: TPE) sind Werkstoffe, welche thermoplastisch verarbeitbar sind und gummiähnliche Gebrauchseigenschaften aufweisen.
Thermoplastische Elastomere lassen sich sehr leicht formen, da sie bei der Verarbeitung den plastischen Zustand durchlaufen. Sie lassen sich in allen Härten von 5 Shore A bis über 70 Shore D herstellen.
Thermoplastische Elastomere haben in Teilbereichen physikalische Vernetzungspunkte die sich bei Wärme auflösen, ohne dass sich die Makromoleküle zersetzen. Daher lassen sie sich wesentlich besser verarbeiten als normale Elastomere. So können auch Kunststoffabfälle wieder eingeschmolzen und weiter verarbeitet werden.
Nach dem inneren Aufbau unterscheidet man Blockcopolymere und Elastomerlegierungen.
Blockcopolymere besitzen innerhalb eines Moleküls Hart- und Weichsegmente. Der Kunststoff besteht also aus einer Molekülsorte, in der beide Eigenschaften verteilt sind.
Elastomerlegierungen sind Polyblends, also Zusammenmischungen (Gemenge) von fertigen Polymeren, der Kunststoff besteht also aus mehreren Molekülsorten. Durch unterschiedliche Mischungsverhältnisse und Zuschlagmittel erhält man maßgeschneiderte Werkstoffe (beispielsweise Polyolefin-Elastomer aus Polypropylen (PP) und Naturgummi (NR) - je nach Mengenverhältnis decken sie einen weiten Härtebereich ab).

Man unterscheidet folgende Gruppen:
- TPE-O oder TPO = Thermoplastische Elastomere auf Olefinbasis, vorwiegend PP/EPDM, z. B. Santoprene^{®} (AES/Monsanto)
- TPE-V oder TPV = Vernetzte thermoplastische Elastomere auf Olefinbasis, vorwiegend PP/EPDM, z. B. Sarlink^{®} (DSM)
- TPE-U oder TPU = Thermoplastische Elastomere auf Urethanbasis, z. B. Desmopan^{®} (Bayer)
- TPE-E oder TPC = Thermoplastische Copolyester, z. B. Hytrel^{®} (DuPont)
- TPE-S oder TPS = Styrol-Blockcopolymere (SBS, SEBS, SEPS, SEEPS und MBS), z. B. Septon^{®} (Kuraray) oder Thermolast^{®} (Kraiburg TPE)
- TPE-A oder TPA = Thermoplastische Copolyamide, z. B. PEBAX^{®} (Arkema)

Besonders bevorzugte thermoplastische Elastomere sind thermoplastische Copolyester, thermoplastische Copolyamide und thermoplastische Polyurethane.

Bevorzugt wird die Mischung in einer Formmasse eines Polyamides oder eines Polyesters verwendet. Geeignete Polyamide sind z. B. in der DE-A-19 920 276 beschrieben.

Bevorzugt handelt es sich bei den Polyamiden um solche vom Aminosäure-Typ und/oder vom Diamin-Dicarbonsäure-Typ.

Bevorzugte Polyamide sind Polyamid 6 und/oder Polyamid 66.

Bevorzugt sind die Polyamide unverändert, gefärbt, gefüllt, ungefüllt, verstärkt, unverstärkt oder auch anders modifiziert.

Bevorzugt handelt es sich bei den Polyestern um Polyethylenterephthalat oder Polybutylenterephthalat.

Bevorzugt sind die Polyester unverändert, gefärbt, gefüllt, ungefüllt, verstärkt, unverstärkt oder auch anders modifiziert.

### Beispiele

### 1. Eingesetzte Komponenten

Handelsübliche Polymere (Granulate):
   Polyamid 6.6 (PA 6.6-GV): Ultramid^{®} A27 (Fa. BASF AG, D)
   Polyamid 6T/66: Zytel^{®} HTN FE 8200 (Fa. DuPont, USA)
   Polybutylenterephthalat (PBT): Ultradur^{®} B4500 (Fa. BASF AG, D)
   Polyamid 46: Stanyl^{®} PA 46 TE 300 (DSM, NL)
   Glasfasern Vetrotex^{®} 983 EC 10 4,5 mm (Fa. Saint-Gobain-Vetrotex, D)
   Glasfasern Vetrotex^{®} 952 EC 10 4,5 mm (Fa. Saint-Gobain-Vetrotex, D)
   Glasfasern Vetrotex^{®} 995 EC 10 4,5 mm (Fa. Saint-Gobain-Vetrotex, D)
Flammschutzmittel (Komponente A):
   Aluminiumsalz der Diethylphosphinsäure, im Folgenden als DEPAL bezeichnet
Flammschutzmittel (Komponente B):
   Aluminiumsalz der Phosphorigen Säure, im Folgenden als PHOPAL bezeichnet
Synergist (Komponente C):
   Melaminpolyphosphat (als MPP bezeichnet) Melapur^{®} 200 (Fa. Ciba SC, CH) Melamincyanurat (als MC bezeichnet) Melapur^{®} MC50 (Fa. Ciba SC, CH) Melem, Delacal^{®} 420, Delacal^{®} 360 (Fa. Delamin Ltd, UK)
Komponente D:
   Zinkborat Firebrake^{®} ZB und Firebrake^{®} 500, Fa. Borax, USA
   Böhmit: Apyral AOH 180, Fa. Nabaltec, D
Phosphonite (Komponente E):
   Sandostab^{®} P-EPQ^{®}, Fa. Clariant GmbH, D
Wachskomponenten (Komponente F):
   Licomont^{®} CaV 102, Clariant Produkte (Deutschland) GmbH, D (Ca-Salz der Montanwachssäure)
   Licowax^{®} E, Fa. Clariant Produkte (Deutschland) GmbH, D (Ester der Montanwachssäure)

### 2. Herstellung, Verarbeitung und Prüfung von flammhemmenden Kunststoff-Formmassen

Die Flammschutzmittelkomponenten wurden in dem in der Tabelle angegebenen Verhältnis mit dem Phosphonit, den Gleitmitteln und Stabilisatoren vermischt und über den Seiteneinzug eines Doppelschnecken-Extruders (Typ Leistritz ZSE 27/44D) bei Temperaturen von 260 bis 310 °C in PA 6.6 bzw. bei 250 - 275 °C in PBT eingearbeitet. Die Glasfasern wurden über einen zweiten Seiteneinzug zugegeben. Der homogenisierte Polymerstrang wurde abgezogen, im Wasserbad gekühlt und anschließend granuliert.

Nach ausreichender Trocknung wurden die Formmassen auf einer Spritzgießmaschine (Typ Arburg 320 C Allrounder) bei Massetemperaturen von 250 bis 300 °C zu Prüfkörpern verarbeitet und anhand des UL 94-Tests (Underwriter Laboratories) auf Flammwidrigkeit geprüft und klassifiziert.

Nach UL 94 ergeben sich folgende Brandklassen:
V-0 kein Nachbrennen länger als 10 sec, Summe der Nachbrennzeiten bei 10 Beflammungen nicht größer als 50 sec, kein brennendes Abtropfen, kein vollständiges Abbrennen der Probe, kein Nachglühen der Proben länger als 30 sec nach Beflammungsende.
V-1 kein Nachbrennen länger als 30 sec nach Beflammungsende, Summe der Nachbrennzeiten bei 10 Beflammungen nicht größer als 250 sec, kein Nachglühen der Proben länger als 60 sec nach Beflammungsende, übrige Kriterien wie bei V-0.
V-2 Zündung der Watte durch brennendes Abtropfen, übrige Kriterien wie bei V-1.

Nicht klassifizierbar (nkl) erfüllt nicht die Brandklasse V-2.

Die Fließfähigkeit der Formmassen wurde durch Ermittlung des Schmelzvolumenindex (MVR) bei 275 °C/2,16 kg bestimmt. Ein starker Anstieg des MVR-Wertes deutet auf einen Polymerabbau hin.

Sämtliche Versuche der jeweiligen Serie wurden, falls keine anderen Angaben gemacht wurden, aufgrund der Vergleichbarkeit unter identischen Bedingungen (Temperaturprogramme, Schneckengeometrien, Spritzgießparameter, etc.), durchgeführt.

Bei den Mengenangaben in den nachfolgenden Tabellen handelt es sich um Gewichtsteile.

Die Tabelle 1 zeigt, wie durch sukzessiven Ersatz von DEPAL durch Aluminiumphosphit die Nachbrennzeit im UL 94 Test deutlich geringer wird bis zu einem Aluminiumphosphitgehalt von 3,75 Gew.-%. Bei höherem Aluminiumphosphitgehalt steigt die Nachbrennzeit wieder an.

**Tabelle 1: PA 66 GF 30 Versuchsergebnisse. V1 ist ein Vergleichsbeispiel, B1 bis B4 erfindungsgemäße Flammschutz-Stabilisator-Mischung**

| | V1 | B1 | B2 | B3 | B4 |
|---|---|---|---|---|---|
| Polyamid 66 | 50 | 50 | 50 | 50 | 50 |
| Glasfasern 983 | 30 | 30 | 30 | 30 | 30 |
| Komponente A: DEPAL | 20 | 18,75 | 17,5 | 16,25 | 15 |
| Komponente B: PHOPAL | | 1,25 | 2,5 | 3,75 | 5 |
| UL 94 0,8 mm | V-1 | V-0 | V-0 | V-0 | V-0 |
| Nachbrennzeiten in Sekunden (10 Beflammungen) | 29 | 16 | 10 | 6 | 12 |

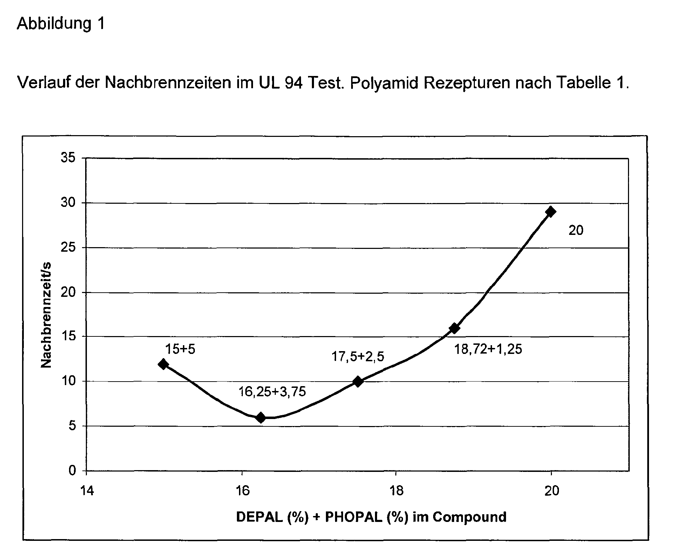

Abbildung 1 zeigt den Verlauf der Nachbrennzeiten im UL 94 Test. Polyamid Rezepturen nach Tabelle 1.

In Tabelle 2 sind Vergleichsbeispiele V2 bis V4 dargestellt, in denen eine Flammschutzmittel-Stabilisator-Kombination, basierend auf dem Aluminiumsalz der Diethylphosphinsäure (DEPAL) und dem stickstoffhaltigen Synergisten Melaminpolyphosphat(MPP) allein verwendet wurden.

Die Ergebnisse, in denen die Flammschutzmittel-Stabilisator-Mischung gemäß der Erfindung eingesetzt wurden, sind in den Beispielen B5 bis B7 aufgelistet. Alle Mengen sind als Gew.-% angegeben und beziehen sich auf die Kunststoff-Formmasse einschließlich der Flammschutzmittel-Stabilisator-Kombination und Zusatzstoffen.

**Tabelle 2: PA 66 GF 30 Versuchsergebnisse. V2 bis V4 sind Vergleichsbeispiele, B5 bis B7 erfindungsgemäße Flammschutz-Stabilisator-Mischung**

| | V2 | V3 | V4 | B5 | B6 | B7 |
|---|---|---|---|---|---|---|
| Polyamid 66 | 49,55 | 49,55 | 49,55 | 49,55 | 49,55 | 49,55 |
| Glasfasern 983 | 30 | 30 | 30 | 30 | 30 | 30 |
| A: DEPAL | 13 | 12 | 17 | 15 | 17 | 17 |
| B: PHOPAL | | | | 2 | 3 | 2 |
| C: MPP | 7 | 8 | 3 | 3 | | 1 |
| F: CaV 102 | 0,25 | 0,25 | 0,25 | 0,25 | 0,25 | 0,25 |
| E: P-EPQ | 0,20 | 0,20 | 0,20 | 0,20 | 0,20 | 0,20 |
| UL 94 0,8 mm | V-0 | V-0 | V-1 | V-0 | V-0 | V-0 |
| MVR 275 °C/2,16 kg | 19 | 21 | 12 | 5 | 3 | 4 |
| Ausblühungen* | stark | deutlich | gering | etwas | keine | keine |
| Farbe | grau | grau | weiß | weiß | weiß | weiß |
| Schlagzähigkeit [kJ/m²] | 60 | 59 | 65 | 61 | 60 | 63 |
| Kerbschlagzähigkeit [kJ/m^{z}] | 12 | 11 | 13 | 14 | 15 | 12 |

| | | | | | | |
|---|---|---|---|---|---|---|
| * 14 Tage 100 % Feuchte 70 °C | | | | | | |

Aus den Beispielen B5, B6 und B7 geht hervor, dass die erfindungsgemäße Mischung aus den Komponenten DEPAL und PHOPAL und ggf. Melaminpolyphosphat die Verarbeitbarkeit der Polymere und die Eigenschaften der Spritzgusskörper eindeutig verbessert, ohne die Flammschutzwirkung zu beeinträchtigen.

Die Einarbeitung der Flammschutzmittel DEPAL und MPP in PA 6.6 führt zwar zu UL 94 V-0, aber auch zu einer Grau-Verfärbung der Formmassen, Ausblühungen und hohen Schmelzindizes (V2 und V3). Durch Verringerung des MPP Gehaltes kann die Grauverfärbung verhindert werden und die Ausblühungen gehen deutlich zurück, aber es wird auch kein V-0 erreicht (V4).

Wird nun eine erfindungsgemäße Flammschutzmittel-Stabilisator-Kombination aus DEPAL und PHOPAL (B5, B6, B7) eingesetzt, so resultiert neben der Flammwidrigkeit auch keine Verfärbung, keine Ausblühungen, geringe Schmelzindices und gute mechanische Eigenschaften. Am geringen Schmelzindex (MVR) ist zu erkennen, dass es nicht zu Polymerabbau kommt.

**Tabelle 3: Vergleichsbeispiele DEPAL + Melem bzw. DEPAL+Zinborat bzw. DEPAL+Böhmit und erfindungsgemäße Kombinationen von DEPAL und PHOPAL in Polyamid 66 GF**

| | V5 | V6 | V7 | B8 | B9 | B10 |
|---|---|---|---|---|---|---|
| Polyamid 66 | 49,55 | 49,55 | 49,55 | 49,55 | 49,55 | 49,55 |
| Glasfasern 983 | 30 | 30 | 30 | 30 | 30 | 30 |
| A: DEPAL | 15 | 17 | 17 | 15 | 15 | 16 |
| B: PHOPAL | | | | 3 | 3 | 2 |
| C2: Melem | 5 | | | 2 | | |
| D1: Zinkborat | | 3 | | | 2 | 1 |
| D2: Böhmit | | | 3 | | | 1 |
| F: CaV 102 | 0,25 | 0,25 | 0,25 | 0,25 | 0,25 | 0,25 |
| E: P-EPQ | 0,20 | 0,20 | 0,20 | 0,20 | 0,20 | 0,20 |
| UL 94 0,8 mm | V-1 | V-1 | V-1 | V-0 | V-0 | V-0 |
| MVR 275 °C/2,16 kg | 6 | 5 | 4 | 5 | 4 | 4 |
| Ausblühungen* | deutlich | gering | gering | keine | keine | keine |
| Farbe | gelblich | weiß | weiß | weiß | weiß | weiß |
| Schlagzähigkeit [kJ/m²] | 63 | 60 | 51 | 61 | 65 | 62 |
| Kerbschlagzähigkeit [kJ/m²] | 15 | 16 | 9 | 14 | 15 | 11 |

| | | | | | | |
|---|---|---|---|---|---|---|
| * 14 Tage 100 % Feuchte 70 °C | | | | | | |

Die Einarbeitung der Flammschutzmittel DEPAL und Melem bzw. DEPAL und Zinkborat bzw. DEPAL und Böhmit in PA 6.6 führt zwar zu geringen Ausblühungen und niedrigen Schmelzindizes, ergibt aber kein V-0, nur eine V-1 Einstufung (V5, V6, V7).

Wird nun eine erfindungsgemäße Flammschutzmittel-Stabilisator-Kombination aus DEPAL und PHOPAL mit Melem, Zinkborat oder Böhmit (B8, B9, B10) eingesetzt, so resultiert neben der Flammwidrigkeit nach UL 94 V-0 auch keine Verfärbung, keine Ausblühungen, geringe Schmelzindices und gute mechanische Eigenschaften. Am geringen Schmelzindex (MVR) ist zu erkennen, dass es nicht zu Polymerabbau kommt.

**Tabelle 4: PBT GF 25 Versuchsergebnisse. V8-V10 sind Vergleichsbeispiele, B11-B13 erfindungsgemäße Flammschutz-Stabilisator-Mischung**

| | V8 | V9 | V10 | B11 | B12 | B13 |
|---|---|---|---|---|---|---|
| PBT | 49,55 | 49,55 | 49,55 | 49,55 | 49,55 | 49,55 |
| Glasfasern 952 | 25 | 25 | 25 | 25 | 25 | 25 |
| A: DEPAL | 13,3 | 12 | 12 | 12 | 12 | 12 |
| B: PHOPAL | | | | 5 | 4 | 4 |
| C1: MC | 7 | 7 | 7 | 3 | 3 | 3 |
| C2: MPP | | 1 | | | 1 | |
| C3: Melem | | | 1 | | | 1 |
| E: Licowax E | 0,25 | 0,25 | 0,25 | 0,25 | 0,25 | 0,25 |
| F: P-EPQ | 0,20 | 0,20 | 0,20 | 0,20 | 0,20 | 0,20 |
| UL 94 0,8 mm | V-1 | V-1 | V-1 | V-0 | V-0 | V-0 |
| Löseviskosität SV* | 1185 | 1201 | 1179 | 1375 | 1364 | 1338 |
| Bruchdehnung [%] | 2,1 | 2,2 | 2,1 | 2,4 | 2,4 | 2,4 |
| Schlagzähigkeit [kJ/m²] | 40 | 41 | 39 | 49 | 48 | 47 |
| Kerbschlagzähigkeit [kJ/m²] | 6,3 | 6,6 | 6,2 | 7,8 | 7,5 | 7,6 |

| | | | | | | |
|---|---|---|---|---|---|---|
| * in Dichloressigsäure, reines PBT (uncompoundiert) hat 1450 | | | | | | |

Die Einarbeitung von DEPAL und MC und den weiteren Additiven (Beispiele V7, V8, V9) führt nur zu einer V-1 Einstufung und einem deutlichen Polymerabbau, erkenntlich an den niedrigen Löseviskositäten. Auch die mechanischen Werte sind im Vergleich zu nicht flammgeschütztem PBT niedrig. Durch die erfindungsgemäße Kombination von DEPAL mit PHOPAL und den weiteren Additiven wird der Polymerabbau nahezu vollständig unterdrückt, es wird die Brandklasse V-0 erreicht und die mechanischen Werte werden verbessert.

**Tabelle 5: PA6T/66 GF 30 Versuchsergebnisse. V11-V13 sind Vergleichsbeispiele, B14-B16 erfindungsgemäße Flammschutz-Stabilisator-Mischung**

| | V11 | V12 | V13 | B14 | B15 | B16 |
|---|---|---|---|---|---|---|
| Polyamid 6T/66 | 54,55 | 54,55 | 57,55 | 54,55 | 57,55 | 57,55 |
| Glasfasern 983 | 30 | 30 | 30 | 30 | 30 | 30 |
| A: DEPAL | 15 | 13 | 12 | 14,5 | 10 | 9 |
| B: PHOPAL | | | | 0,5 | 2 | 1 |
| D: Böhmit | | 2 | | | | 2 |
| F: CaV 102 | 0,25 | 0,25 | 0,25 | 0,25 | 0,25 | 0,25 |
| E: P-EPQ | 0,20 | 0,20 | 0,20 | 0,20 | 0,20 | 0,20 |
| UL 94 0,8 mm | V-0 | V-0 | V-1 | V-0 | V-0 | V-0 |
| Korrosion* | deutlich | n.b. | n.b. | gering | n.b. | n.b. |
| Schlagzähigkeit [kJ/m²] | 40 | 35 | 45 | 41 | 46 | 40 |
| Kerbschlagzähigkeit [kJ/m²] | 8 | 6 | 12 | 8 | 13 | 9 |

| | | | | | | |
|---|---|---|---|---|---|---|
| * die Bestimmung der Korrosion erfolgte nach der in der WO 2009/109318 beschriebenen Plättchenmethode. | | | | | | |

Die Tabelle 5 zeigt, dass mit der erfindungsgemäßen Kombination von DEPAL und PHOPAL eine V-0 Einstufung mit deutlich besseren mechanischen Werten erhalten wird als ohne die PHOPAL-Zugabe. Geringe Zusätze von PHOPAL verringern die mit DEPAL in PA 6T/66 beobachtete Korrosion deutlich.

**Tabelle 6: PA 46 GF 30 Versuchsergebnisse. V14-V15 sind Vergleichsbeispiele, B17-B18 erfindungsgemäße Flammschutz-Stabilisator-Mischung**

| | V14 | V15 | B17 | B18 |
|---|---|---|---|---|
| Polyamid 46 | 50 | 48 | 52 | 30 |
| Glasfasern 995 | 30 | 30 | 30 | 30 |
| A: DEPAL | 20 | 18 | 15 | 15 |
| B: PHOPAL | | | 3 | 5 |
| D1: Zinkborat | | 4 | | |
| UL 94 0,8 mm | V-1 | V-1 | V-0 | V-0 |
| Nachbrennzeiten in Sekunden (10 Beflammungen) | 164 | 131 | 29 | 33 |
| UL 94 1,6 mm | V-1 | V-1 | V-0 | V-0 |
| Nachbrennzeiten in Sekunden (10 Beflammungen) | 147 | 103 | 12 | 13 |

Glasfaserverstärktes Polyamid 46 kann mit DEPAL bzw. DEPAL und Zinkborat flammhemmend ausgerüstet werden wie die Vergleichsbeispiele V14 - V15 in Tabelle 6 zeigen. Allerdings ist im UL 94 Test mit 20 - 22 Gew.-% Flammschutzmittelmenge nur die Klassifizierung V-1 mit langen Nachbrennzeiten zu erreichen. Die erfindungsgemäße Flammschutz-Stabilisator-Mischung zeigt in PA 46 GF30 eine deutlich höhere Flammschutzwirksamkeit, so dass mit einer geringeren Einsatzmenge von 18 - 20 Gew.-% die höhere UL 94 Klasse V-0 sicher erreicht werden kann, wie in den Beispielen B17 und B18 in Tabelle 6 zu erkennen ist.

## Patentansprüche

1. Flammschutzmittel- Stabilisator-Kombination für thermoplastische Polymere, enthaltend als Komponente A 20 bis 99 Gew.-% eines Dialkylphosphinsäuresalzes der Formel (I) und/oder eines Diphosphinsäuresalzes der Formel (II) und/oder deren Polymere, 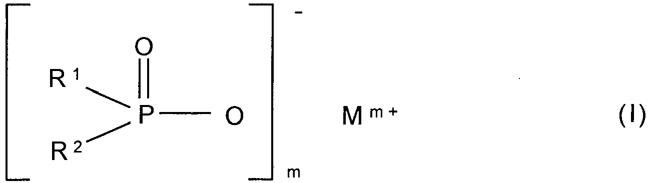 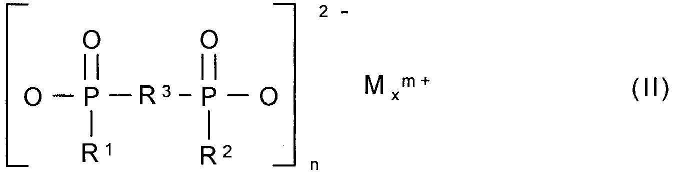 worin
R¹, R² gleich oder verschieden sind und Methyl, Ethyl, n-Propyl, iso-Propyl, n-Butyl, tert.-Butyl, n-Pentyl und/oder Phenyl;
R³ C₁-C₁₀-Alkylen, linear oder verzweigt, C₆-C₁₀-Arylen, C₇-C₂₀-Alkylarylen oder C₇-C₂₀-Arylalkylen;
M Mg, Ca, Al, Sb, Sn, Ge, Ti, Zn, Fe, Zr, Ce, Bi, Sr, Mn, Li, Na, K und/oder eine protonierte Stickstoffbase;
m 1 bis 4;
n 1 bis 4;
x 1 bis 4
bedeuten,
als Komponente B 1 bis 80 Gew.-% eines Salzes der phosphorigen Säure mit der allgemeinen Formel (III)
[HP(=O)O₂]²⁻M^{m+} (III)
worin
M Mg, Ca, Al, Sb, Sn, Ge, Ti, Zn, Fe, Zr, Ce, Bi, Sr, Mn, Li, Na und/oder K und
m 1 bis 4
bedeuten,
als Komponente C 0 bis 30 Gew.-% eines stickstoffhaltigen Synergisten und/oder eines Phosphor/Stickstoff Flammschutzmittels,
als Komponente D 0 bis 10 Gew.-% eines Zinksalzes und/oder eines basischen und/oder amphoteren Oxides, Hydroxides, Carbonates, Silikates, Borates, Stannates, gemischten Oxid-Hydroxides, Oxid-Hydroxid-Carbonates, Hydroxid-Silikates und/oder Hydroxid-Borates und/oder Mischungen dieser Stoffe,
als Komponente E 0 bis 3 Gew. % eines Phosphonits und/oder einer Mischung aus einem Phosphonit und einem Phosphit und als Komponente F 0 bis 3 Gew.% eines Esters und/oder Salzes von langkettigen aliphatischen Carbonsäuren (Fettsäuren), die typischerweise Kettenlängen von C₁₄ bis C₄₀ aufweisen, wobei die Summe der Komponenten immer 100 Gew.-% beträgt.

2. Flammschutzmittel-Stabilisator-Kombination nach Anspruch 1 oder 2, **dadurch gekennzeichnet, dass** R³ Methylen, Ethylen, n-Propylen, iso-Propylen, n-Butylen, tert.-Butylen, n-Pentylen, n-Octylen oder n-Dodecylen; Phenylen oder Naphthylen; Methylphenylen, Ethylphenylen, tert.-Butylphenylen, Methylnaphthylen, Ethylnaphthylen oder tert.-Butylnaphthylen; Phenylmethylen, Phenylethylen, Phenylpropylen oder Phenylbutylen bedeutet.

3. Flammschutzmittel-Stabilisator-Kombination nach Anspruch 1 oder 2, **dadurch gekennzeichnet, dass** sie
| | | | |
|---|---|---|---|
| 60 | bis | 89,9 | Gew.-% Komponente A, |
| 10 | bis | 40 | Gew.-% Komponente B, |
| 0 | bis | 30 | Gew.-% Komponente C, |
| 0 | bis | 15 | Gew.-% Komponente D, |
| 0 | bis | 2 | Gew.-% Komponente E und |
| 0,1 | bis | 2 | Gew.-% Komponente F enthält |

4. Flammschutzmittel-Stabilisator-Kombination nach Anspruch 1 oder 2, **dadurch gekennzeichnet, dass** sie
| | | | |
|---|---|---|---|
| 60 | bis | 84,9 | Gew.-% Komponente A, |
| 10 | bis | 40 | Gew.-% Komponente B, |
| 5 | bis | 30 | Gew.-% Komponente C, |
| 0 | bis | 10 | Gew.-% Komponente D, |
| 0 | bis | 2 | Gew.-% Komponente E und |
| 0,1 | bis | 2 | Gew.-% Komponente F enthält |

5. Flammschutzmittel-Stabilisator-Kombination nach Anspruch 1 oder 2, **dadurch gekennzeichnet, dass** sie
| | | | |
|---|---|---|---|
| 60 | bis | 84,8 | Gew.-% Komponente A, |
| 10 | bis | 40 | Gew.-% Komponente B, |
| 5 | bis | 30 | Gew.-% Komponente C, |
| 0 | bis | 10 | Gew.-% Komponente D, |
| 0,1 | bis | 2 | Gew.-% Komponente E und |
| 0,1 | bis | 2 | Gew.-% Komponente F enthält |

6. Flammschutzmittel-Stabilisator-Kombination nach einem oder mehreren der Ansprüche 1 bis 5, **dadurch gekennzeichnet, dass** es sich bei der Komponente B um Umsetzungsprodukte von phosphoriger Säure mit Aluminiumverbindungen handelt.

7. Flammschutzmittel-Stabilisator-Kombination nach einem oder mehreren der Ansprüche 1 bis 6, **dadurch gekennzeichnet, dass** es sich bei der Komponente B um Aluminiumphosphit [Al(H2PO₃)₃], sekundäres Aluminiumphosphit [Al₂(HPO₃)₃], basisches Aluminiumphosphit [Al(OH)(H₂PO₃)₂*2aq], Aluminiumphosphittetrahydrat [Al₂(HPO₃)₃*4aq], Aluminiumphosphonat, Al₇(HPO₃)₉(OH)₆(1,6-Hexandiamin)_{1,5}*12H₂O, Al₂(HPO₃)^{3*}xAl₂O₃*nH₂O mit x = 2,27 - 1 und/oder Al₄H₆P₁₆O₁₈ handelt.

8. Flammschutzmittel-Stabilisator-Kombination nach einem oder mehreren der Ansprüche 1 bis 7, **dadurch gekennzeichnet, dass** es sich bei der Komponente C um Kondensationsprodukte des Melamins und/oder um Umsetzungsprodukte von Melamin mit Polyphosphorsäure und/oder um Umsetzungsprodukte von Kondensationsprodukten des Melamins mit Polyphosphorsäure oder Gemische davon handelt.

9. Flammschutzmittel-Stabilisator-Kombination nach einem oder mehreren der Ansprüche 1 bis 8, **dadurch gekennzeichnet, dass** es sich bei der Komponente C um Melem, Melam, Melon, Dimelaminpyrophosphat, Melaminpolyphosphat, Melempolyphosphat, Melampolyphosphat, Melonpolyphosphat und/oder gemischte Polysalze davon handelt.

10. Flammschutzmittel-Stabilisator-Kombination nach einem oder mehreren der Ansprüche 1 bis 7, **dadurch gekennzeichnet, dass** es sich bei der Komponente C um stickstoffhaltige Phosphate der Formeln (NH₄)_{y} H_{3-y} PO₄ bzw. (NH₄ PO₃)_{z}, mit y gleich 1 bis 3 und z gleich 1 bis 10.000, handelt.

11. Flammschutzmittel-Stabilisator-Kombination nach einem oder mehreren der Ansprüche 1 bis 10, **dadurch gekennzeichnet, dass** es sich bei der Komponente D um Magnesiumoxid, Calciumoxid, Aluminiumoxid, Zinkoxid, Manganoxid, Zinnoxid, Aluminiumhydroxid, Böhmit, Dihydrotalcit, Hydrocalumit, Magnesiumhydroxid, Calciumhydroxid, Zinkhydroxid, Zinnoxidhydrat, Manganhydroxid, Zinkborat, basisches Zink-Silikat und/oder Zinkstannat handelt.

12. Flammschutzmittel-Stabilisator-Kombination nach einem oder mehreren der Ansprüche 1 bis 11 **dadurch gekennzeichnet, dass** es sich bei den Phosphoniten um solche der allgemeinen Struktur
R-[P(OR₁)₂]ₘ (IV)
handelt, wobei
R ein ein- oder mehrwertiger aliphatischer, aromatischer oder hetero-aromatischer organischer Rest ist und
R₁ eine Verbindung der Struktur (V) 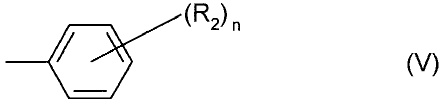
ist oder die beiden Reste R₁ eine verbrückende Gruppe der Struktur (VI) bilden 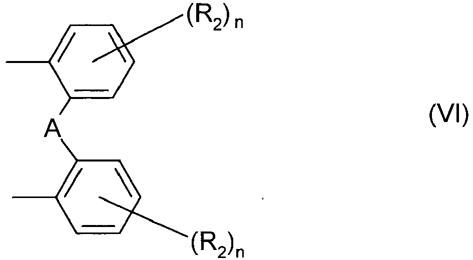 mit
A direkter Bindung, O, S, C₁₋C₁₈-Alkylen (linear oder verzweigt), C₁₋C₁₈-Alkyliden (linear oder verzweigt), in denen
R₂ unabhängig voneinander C₁₋C₁₂-Alkyl (linear oder verzweigt), C₁₋C₁₂-Alkoxy, C₅₋C₁₂-Cycloalkyl bedeuten und
n 0 bis 5 sowie
m 1 bis 4 bedeutet.

13. Flammschutzmittel-Stabilisator-Kombination nach einem oder mehreren der Ansprüche 1 bis 12, **dadurch gekennzeichnet, dass** es sich bei der Komponente F um Alkali-, Erdalkali-, Aluminium- und/oder Zinksalze von langkettigen Fettsäuren mit 14 bis 40 C-Atomen und/oder um Umsetzungsprodukte von langkettigen Fettsäuren mit 14 bis 40 C-Atomen mit mehrwertigen Alkoholen, wie Ethylenglykol, Glycerin, Trimethylolpropan und/oder Pentaerythrit handelt.

14. Flammfest ausgerüstete Kunststoff-Formmasse, enthaltend eine Flammschutzmittel-Stabilisator-Kombination gemäß einem oder mehreren der Ansprüche 1 bis 13, **dadurch gekennzeichnet, dass** es sich bei dem Kunststoff um thermoplastischen Polymere und/oder Elastomere der Art Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol) oder PPE/HIPS (Polyphenylenether/Polystyrol-HI) Kunststoffe handelt und dass sie die Flammschutzmittel-Stabilisator-Kombination der Ansprüche 1 bis 13 in einer Menge von 2 bis 50 Gew.-%, bezogen auf die Kunststoff-Formmasse, enthält.

15. Polymer-Formkörper, -Filme, -Fäden und -Fasern enthaltend eine Flammschutzmittel-Stabilisator-Kombination gemäß einem oder mehreren der Ansprüche 1 bis 13, **dadurch gekennzeichnet, dass** es sich bei dem Polymeren um Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol), Polyamid, Polyester und/oder ABS und/oder Elastomere handelt und dass sie die Flammschutzmittel-Stabilisator-Kombination der Ansprüche 1 bis 13 in einer Menge von 2 bis 50 Gew.-%, bezogen auf die Polymer-Formkörper, -Filme, -Fäden und -Fasern, enthält.

16. Flammfest ausgerüstete Kunststoff-Formmasse, Polymer-Formkörper, -Filme, -Fäden und -Fasern nach Anspruch 14 oder 15, **dadurch gekennzeichnet, dass** es sich bei dem Kunststoff bzw. dem Polymer um Polyamide und/oder um Polyester handelt.

## Claims

1. A flame retardant-stabilizer combination for thermoplastic polymers, comprising as component A
20 to 99% by weight of a dialkylphosphinic salt of the formula (I) and/or of a diphosphinic salt of the formula (II) and/or polymers thereof 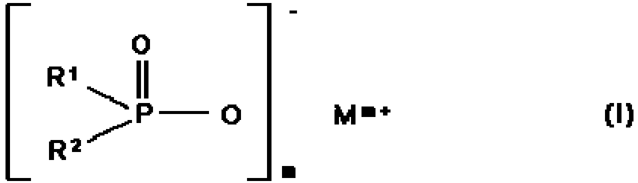 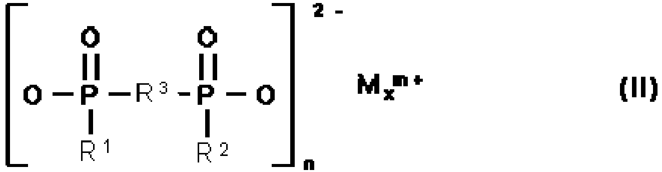 in which
R1, R2are the same or different and are methyl, ethyl, n-propyl, isopropyl, n-butyl, tert-butyl, n-pentyl and/or phenyl;
R3 is linear or branched C1-C10-alkylene, C6-C10-arylene, C7-C20-alkylarylene or C7-C20-arylalkylene;
M is Mg, Ca, Al, Sb, Sn, Ge, Ti, Zn, Fe, Zr, Ce, Bi, Sr, Mn, Li, Na, K and/or a protonated nitrogen base;
m is 1 to 4;
n is 1 to 4;
x is 1 to 4,
as component B 1 to 80% by weight of a salt of phosphorous acid having the formula (III)
[HP(=O)O2]2-M m+ (III)
in which
M is Mg, Ca, Al, Sb, Sn, Ge, Ti, Zn, Fe, Zr, Ce, Bi, Sr, Mn, Li, Na and/or K;
m is 1 to 4,
as component C 0 to 30% by weight of a nitrogen-containing synergist and/or of a phosphorus/nitrogen flame retardant,
as component D 0 to 10% by weight of a zinc salt and/or of a basic and/or amphoteric oxide, hydroxide, carbonate, silicate, borate, stannate, mixed oxide-hydroxide, oxide-hydroxide-carbonate, hydroxide-silicate and/or hydroxide-borate and/or mixtures of these substances,
as component E 0 to 3% by weight of a phosphonite and/or of a mixture of a phosphonite and a phosphite, and as component F 0 to 3% by weight of an ester and/or salt of long-chain aliphatic carboxylic acids (fatty acids) which typically have chain lengths of C14 to C40, where the sum of the components is always 100% by weight.

2. The flame retardant-stabilizer combination as claimed in claim 1 or 2, wherein R3 is methylene, ethylene, n-propylene, isopropylene, n-butylene, tert-butylene, n-pentylene, n-octylene or n-dodecylene; phenylene or naphthylene; methylphenylene, ethylphenylene, tert-butylphenylene, methylnaphthylene, ethylnaphthylene or tert-butylnaphthylene; phenylmethylene, phenylethylene, phenylpropylene or phenylbutylene.

3. The flame retardant-stabilizer combination as claimed in claim 1 or 2, which comprises
| | |
|---|---|
| 60 to 89.9% | by weight of component A, |
| 10 to 40% | by weight of component B, |
| 0 to 30% | by weight of component C, |
| 0 to 15% | by weight of component D, |
| 0 to 2% | by weight of component E and |
| 0.1 to 2% | by weight of component F. |

4. The flame retardant-stabilizer combination as claimed in claim 1 or 2, which comprises
| | |
|---|---|
| 60 to 84.9% | by weight of component A, |
| 10 to 40% | by weight of component B, |
| 5 to 30% | by weight of component C, |
| 0 to 10% | by weight of component D, |
| 0 to 2% | by weight of component E and |
| 0.1 to 2% | by weight of component F. |

5. The flame retardant-stabilizer combination as claimed in claim 1 or 2, which comprises
| | |
|---|---|
| 60 to 84.8% | by weight of component A, |
| 10 to 40% | by weight of component B, |
| 5 to 30% | by weight of component C, |
| 0 to 10% | by weight of component D, |
| 0.1 to 2% | by weight of component E and |
| 0.1 to 2% | by weight of component F. |

6. The flame retardant-stabilizer combination as claimed in one or more of claims 1 to 5, wherein component B comprises reaction products of phosphorous acid with aluminum compounds.

7. The flame retardant-stabilizer combination as claimed in one or more of claims 1 to 6, wherein component B comprises aluminum phosphite [Al(H2PO3)3], secondary aluminum phosphite [Al2(HPO3)3], basic aluminum phosphite [Al(OH)(H2PO3)2*2aq], aluminum phosphite tetrahydrate [Al2(HPO3)3*4aq], aluminum phosphonate, Al7(HPO3)9(OH)6(1,6-hexanediamine)1.5*12H2O, Al2(HPO3)3*xAl2O3*nH2O where x = 2.27 - 1 and/or Al4H6P16018.

8. The flame retardant-stabilizer combination as claimed in one or more of claims 1 to 7, wherein component C comprises condensation products of melamine and/or reaction products of melamine with polyphosphoric acid and/or reaction products of condensation products of melamine with polyphosphoric acid or mixtures thereof.

9. The flame retardant-stabilizer combination as claimed in one or more of claims 1 to 8, wherein component C comprises melem, melam, melon, dimelamine pyrophosphate, melamine polyphosphate, melem polyphosphate, melam polyphosphate, melon polyphosphate and/or mixed poly salts thereof.

10. The flame retardant-stabilizer combination as claimed in one or more of claims 1 to 7, wherein component C comprises nitrogen-containing phosphates of the formulae (NH4)y H3-y PO4 and (NH4 PO3)z, where y is 1 to 3 and z is 1 to 10 000.

11. The flame retardant-stabilizer combination as claimed in one or more of claims 1 to 10, wherein component D comprises magnesium oxide, calcium oxide, aluminum oxide, zinc oxide, manganese oxide, tin oxide, aluminum hydroxide, boehmite, dihydrotalcite, hydrocalumite, magnesium hydroxide, calcium hydroxide, zinc hydroxide, tin oxide hydrate, manganese hydroxide, zinc borate, basic zinc silicate and/or zinc stannate.

12. The flame retardant-stabilizer combination as claimed in one or more of claims 1 to 11, wherein the phosphonites comprise those of the structure
R-[P(OR1)2]m (IV)
where
R is a mono- or polyvalent aliphatic, aromatic or heteroaromatic organic radical and
R1 is a compound of the structure (V) 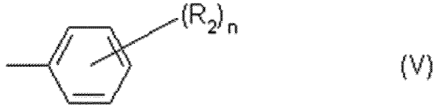 or the two R1 radicals form a bridging group of the structure (VI) 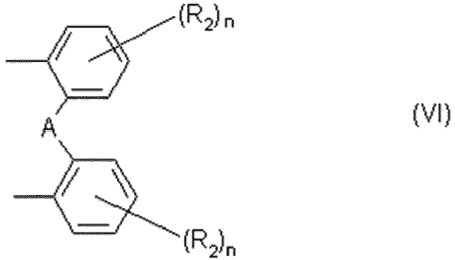 where
A is a direct bond, O, S, C1-C18-alkylene (linear or branched), C1-C18-alkylidene (linear or branched), in which
R2 is independently C1-C12-alkyl (linear or branched), C1-C12-alkoxy, C5-C12-cycloalkyl and
n is 0 to 5 and
m is 1 to 4.

13. The flame retardant-stabilizer combination as claimed in one or more of claims 1 to 12, wherein component F comprises alkali metal, alkaline earth metal, aluminum and/or zinc salts of long-chain fatty acids having 14 to 40 carbon atoms and/or reaction products of long-chain fatty acids having 14 to 40 carbon atoms with polyhydric alcohols such as ethylene glycol, glycerol, trimethylolpropane and/or pentaerythritol.

14. A flame-retardant polymer molding composition comprising a flame retardant-stabilizer combination as claimed in one or more of claims 1 to 13, wherein the polymer comprises thermoplastic polymers and/or elastomers of the HI (high-impact) polystyrene, polyphenylene ether, polyamide, polyester or polycarbonate type, and blends or polymer blends of the ABS (acrylonitrile-butadiene-styrene) or PC/ABS (polycarbonate/ acrylonitrile-butadiene-styrene) or PPE/HIPS (polyphenylene ether/HI polystyrene) polymer type, and the polymer molding composition comprises the flame retardant-stabilizer combination of claims 1 to 13 in an amount of 2 to 50% by weight, based on the polymer molding composition.

15. A polymer molding, film, filament or fiber comprising a flame retardant-stabilizer combination as claimed in one or more of claims 1 to 13, wherein the polymer comprises HI (high-impact) polystyrene, polyphenylene ethers, polyamides, polyesters or polycarbonates, and blends or polymer blends of the ABS (acrylonitrile-butadiene-styrene) or PC/ABS (polycarbonate/ acrylonitrile-butadiene-styrene) type, polyamide, polyester and/or ABS and/or elastomers, and this polymer molding, film, filament or fiber comprises the flame retardant-stabilizer combination of claims 1 to 13 in an amount of 2 to 50% by weight, based on the polymer molding, film, filament or fiber.

16. A flame-retardant polymer molding composition or polymer molding, film, filament or fiber as claimed in claim 14 or 15, wherein the polymer comprises polyamides and/or polyesters.

## Revendications

1. Association d'agent ignifuge et de stabilisant, pour polymères thermoplastiques, contenant en tant que composant A
20 à 99 % en poids d'un sel d'acide dialkylphosphinique de formule (I) et/ou d'un sel d'acide diphosphinique de formule (II) et/ou de leurs polymères, 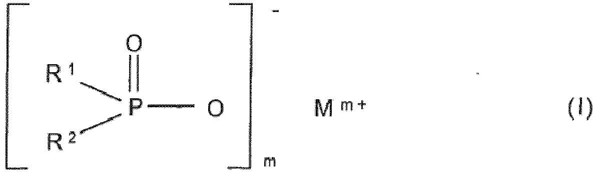 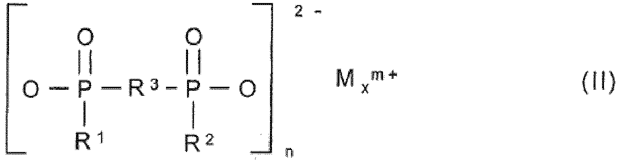 formules dans lesquelles
R¹, R² sont identiques ou différents et représentent un groupe méthyle, éthyle, n-propyle, isopropyle, n-butyle, tert-butyle, n-pentyle et/ou phényle ;
R³ représente un groupe alkylène en C₁-C₁₀. linéaire ou ramifié, un groupe arylène en C₆-C₁₀, alkylarylène en C₇-C₂₀ ou arylalkylène en C₇-C₂₀ ;
M représente Mg, Ca, Al, Sb, Sn, Ge, Ti, Zn, Fe, Zr, Ce, Bi, Sr, Mn, Li, Na, K et/ou une base azotée protonée ;
m vaut de 1 à 4 ;
n vaut de 1 à 4 ;
x vaut de 1 à 4,
en tant que composant B 1 à 80 % en poids d'un sel de l'acide phosphoreux de formule générale (III)
[HP (=O)O₂]²⁻M ^{m+} (III)
dans laquelle
M représente Mg, Ca, Al, Sb, Sn, Ge, Ti, Zn, Fe, Zr, Ce, Bi, Sr, Mn, Li, Na et/ou K et
m vaut de 1 à 4,
en tant que composant C 0 à 30 % en poids d'un agent synergique azoté et/ou d'un agent ignifuge contenant de l'azote/du phosphore,
en tant que composant D 0 à 10 % en poids d'un sel de zinc et/ou d'un oxyde, hydroxyde, carbonate, silicate, borate, stannate, oxyde-hydroxyde mixte, oxyde-hydroxyde-carbonate, hydroxyde-silicate et/ou hydroxyde-borate, basique et/ou amphotère et/ou de mélanges de ces substances,
en tant que composant E 0 à 3 % en poids d'un phosphonite et/ou d'un mélange d'un phosphonite et d'un phosphite et en tant que composant F 0 à 3 % en poids d'un ester et/ou sel d'acides carboxyliques aliphatiques à longue chaîne (acides gras) qui ont caractéristiquement des longueurs de chaîne de C₁₄ à C₄₀, la somme des composants étant toujours égale à 100 % en poids.

2. Association d'agent ignifuge et de stabilisant selon la revendication 1 ou 2, **caractérisée en ce que** R³ représente un groupe méthylène, éthylène, n-propylène, isopropylène, n-butylène, tert-butylène, n-pentylène, n-octylène ou n-dodécylène ; phénylène ou naphtylène ; méthylphénylène, éhylphénylène, tert-butylphénylène, méthylnaphtylène, éthylnaphtylène ou tert-butylnaphtylène ; phénylméthylène, phényléthylène, phénylpropylène ou phénylbutylène.

3. Association d'agent ignifuge et de stabilisant selon la revendication 1 ou 2, **caractérisée en ce qu'**elle contient
| | | | |
|---|---|---|---|
| 60 | à | 89,9 | % en poids de composant A, |
| 10 | à | 40 | % en poids de composant B, |
| 0 | à | 30 | % en poids de composant C, |
| 0 | à | 15 | % en poids de composant D, |
| 0 | à | 2 | % en poids de composant E et |
| 0,1 | à | 2 | % en poids de composant F. |

4. Association d'agent ignifuge et de stabilisant selon la revendication 1 ou 2, **caractérisée en ce qu'**elle contient
| | | | |
|---|---|---|---|
| 60 | à | 84,9 | % en poids de composant A, |
| 10 | à | 40 | % en poids de composant B, |
| 5 | à | 30 | % en poids de composant C, |
| 0 | à | 10 | % en poids de composant D, |
| 0 | à | 2 | % en poids de composant E et |
| 0,1 | à | 2 | % en poids de composant F. |

5. Association d'agent ignifuge et de stabilisant selon la revendication 1 ou 2, **caractérisée en ce qu'**elle contient
| | | | |
|---|---|---|---|
| 60 | à | 84,8 | % en poids de composant A, |
| 10 | à | 40 | % en poids de composant B, |
| 5 | à | 30 | % en poids de composant C, |
| 0 | à | 10 | % en poids de composant D, |
| 0,1 | à | 2 | % en poids de composant E et |
| 0,1 | à | 2 | % en poids de composant F. |

6. Association d'agent ignifuge et de stabilisant selon une ou plusieurs des revendications 1 à 5, **caractérisée en ce que** pour ce qui est du composant B il s'agit de produits de réaction d'acide phosphoreux avec des composés contenant de l'aluminium.

7. Association d'agent ignifuge et de stabilisant selon une ou plusieurs des revendications 1 à 6, **caractérisée en ce que** pour ce qui est du composant B il s'agit de phosphite d'aluminium [Al(H₂PO₃)₃], phosphite d'aluminium secondaire [Al₂(HPO₃)₃], phosphite d'aluminium basique [Al(OH)(H₂PO₃)₂*2aq], phosphite d'aluminium tétrahydraté [Al₂(HPO₃)₃*4aq], phosphonate d'aluminium, Al₇(HPO₃)₉(OH)₆(1,6-hexanediamine)_{1,5}*12H₂O, Al₂(HPO₃)³*xAl₂O₃*nH₂O où x = 2, 27 - 1 et/ou Al₄H₆P₁₆O₁₈.

8. Association d'agent ignifuge et de stabilisant selon une ou plusieurs des revendications 1 à 7, **caractérisée en ce que** pour ce qui est du composant C il s'agit de produits de condensation de la mélamine et/ou de produits de réaction de mélamine avec l'acide polyphosphorique et/ou de produits de réaction de produits de condensation de la mélamine avec l'acide polyphosphorique ou de mélanges de ceux-ci.

9. Association d'agent ignifuge et de stabilisant selon une ou plusieurs des revendications 1 à 8, **caractérisée en ce que** pour ce qui est du composant C il s'agit de melem, mélam, melon, pyrophosphate de dimélamine, polyphosphate de mélamine, polyphosphate de melem, polyphosphate de mélam, polyphosphate de melon et/ou de polysels mixtes de ceux-ci.

10. Association d'agent ignifuge et de stabilisant selon une ou plusieurs des revendications 1 à 7, **caractérisée en ce que** pour ce qui est du composant C il s'agit de phosphates azotés de formules (NH₄)_{y}H_{3-y}PO₄ ou (NH₄PO₃)_{z}, où y vaut de 1 à 3 et z vaut de 1 à 10 000.

11. Association d'agent ignifuge et de stabilisant selon une ou plusieurs des revendications 1 à 10, **caractérisée en ce que** pour ce qui est du composant D il s'agit d'oxyde de magnésium, oxyde de calcium, oxyde d'aluminium, oxyde de zinc, oxyde de manganèse, oxyde d'étain, hydroxyde d'aluminium, boehmite, dihydrotalcite, hydrocalumite, hydroxyde de magnésium, hydroxyde de calcium, hydroxyde de zinc, oxyde de zinc hydraté, hydroxyde de manganèse, borate de zinc, silicate de zinc basique et/ou stannate de zinc.

12. Association d'agent ignifuge et de stabilisant selon une ou plusieurs des revendications 1 à 11, **caractérisée en ce que** pour ce qui est des phosphonites il s'agit de ceux de formule générale
R-[P(OR₁)₂]ₘ (IV)
dans laquelle
R est un radical organique aliphatique, aromatique ou hétéroaromatique, mono- ou plurivalent et
R₁ est un composé de formule (V) 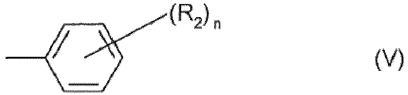
ou les deux radicaux R₁ forment un groupe pontant de formule (VI) 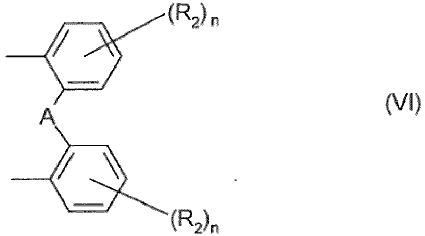 où
A représente une liaison directe, 0, S, un groupe alkylène en C₁-C₁₈ (linéaire ou ramifié), alkylidène en C₁-C₁₈ (linéaire ou ramifié),
formules dans lesquelles
R₂ représentent chaque fois indépendamment un groupe alkyle en C₁-C₁₂ (linéaire ou ramifié), alcoxy en C₁-C₁₂, cycloalkyle en C₅-C₁₂ et
n vaut de 0 à 5 et
m vaut de 1 à 4.

13. Association d'agent ignifuge et de stabilisant selon une ou plusieurs des revendications 1 à 12, **caractérisée en ce que** pour ce qui est du composant F, il s'agit de sels de métaux alcalins, de métaux alcalino-terreux, d'aluminium et/ou de zinc d'acides gras à longue chaîne ayant de 14 à 40 atomes de carbone et/ou de produits de réaction d'acides gras à longue chaîne ayant de 14 à 40 atomes de carbone avec des alcools polyhydriques tels que l'éthylèneglycol, le glycérol, le triméthylpropane et/ou le pentaérythritol.

14. Matière à mouler à base de matière plastique, à traitement ignifuge, contenant une association d'agent ignifuge et de stabilisant selon une ou plusieurs des revendications 1 à 13, **caractérisée en ce que** pour ce qui est de la matière plastique il s'agit de matières synthétiques polymères thermoplastiques et/ou élastomères du type polystyrène HI (antichoc), poly-phénylène-éthers, polyamides, polyesters, polycarbonates et alliages ou alliages polymères du type ABS (acrylonitrile-butadiène-styrène) ou PC/ABS (polycarbonate/acrylonitrile-butadiène-styrène) ou matière plastique PPE/HIPS (polyphénylène-éther/polystyrène-HI) et **en ce qu'**elle contient l'association d'agent ignifuge et de stabilisant selon les revendications 1 à 13 en une quantité de 2 à 50 % en poids, par rapport à la matière à mouler à base de matière plastique.

15. Corps moulés, films, fils et fibres polymères, contenant une association d'agent ignifuge et de stabilisant selon une ou plusieurs des revendications 1 à 13, **caractérisés en ce que** pour ce qui est du polymère il s'agit de polystyrène HI (antichoc), poly-phénylène-éthers, polyamides, polyesters, polycarbonates et d'alliages ou d'alliages polymères du type ABS (acrylonitrile-butadiène-styrène) ou PC/ABS (polycarbonate/acrylonitrile-butadiène-styrène) de polyamide, polyester et/ou d'ABS et/ou d'élastomères et **en ce qu'**ils contiennent l'association d'agent ignifuge et de stabilisant selon les revendications 1 à 13 en une quantité de 2 à 50 % en poids, par rapport aux corps moulés, films, fils et fibres polymères.

16. Matière à mouler à base de matière plastique, corps moulés, films, fils et fibres polymères, à traitement ignifuge, selon la revendication 14 ou 15, **caractérisée en ce que** pour ce qui est de la matière plastique ou du polymère, il s'agit de polyamides et/ou de polyesters.
